# EUROPEAN PATENT APPLICATION

(11) **EP 4 697 141 A1**
(43) Date of publication of application: **18.02.2026**
(21) Application number: 24194096.4
(22) Date of filing: 12.08.2024
(51) Int. Cl.: G06F 3/01, G06F 3/04815, G06F 3/04845, G06F 3/0488

(54) **IMPROVED TOUCHLESS USER INTERACTION WITH VIRTUAL 3D OBJECTS**

(71) Applicant: AMERIA AG, 69124 Heidelberg (DE)
(72) Inventor: Morel, Bernoit, 69126 Heidelberg (DE)
(74) Representative: Best, Bastian

(57) **Abstract**

According to a first aspect of the present invention, it may be provided a method for controlling a virtual 3D object based on a touchless interaction system being associated with a computer device. The method may be computer-implemented. The method may comprise displaying the virtual 3D object by a display means being associated with the computer device. The method may comprise generating, in a second interaction mode and using the touchless interaction system, at least one pointer control command configured to move at least one pointer displayed on the display means in accordance with a free-space movement of at least one finger, preferably of the fingertip of the at least one finger, of a user, while the at least one finger is distanced from the display means. The method may comprise receiving, in the second interaction mode, a selection user input selecting a desired pointer functionality. The method may comprise based on the receiving and essentially for a period of time in which the selection user input is received: causing generating, using the touchless interaction system, at least one functionality-specific control command configured to control the virtual 3D object in accordance with the pointer functionality and in accordance with the free-space movement of the at least one finger of the user. The virtual 3D object may be displayed by a display means in 2D, preferably creating a 3D illusion, e.g., using autostereoscopy as described in more detail below.

## Description

### TECHNICAL FIELD

The present invention generally relates to techniques for touchless user interface control, and more particularly to touchless control of a computer device for controlling a virtual 3D object. One application of the disclosed techniques includes moving, rotating and zooming a medical diagnostic image such as an MRI image.

### BACKGROUND

Electronic devices with display screens have become omnipresent in various areas of modern life. Typical examples of these devices include, without limitation, personal computers, laptops, tablets and smartphones. Devices like these usually provide a Graphical User Interface (GUI) allowing a user to interact with the device. It is common to use such electronic devices on their own, i.e., with the built-in display screen, but due to limitations in the display size it is also common to employ them in combination with other, in particular larger, display solutions, for instance by way of an external monitor, a television screen, a projector or the like.

Various input options are available to interface with the user, which are usually based on physical input devices. These physical input devices may be built-in, such as physical buttons, a keyboard, volume button(s), on-off button(s), or may be external physical input devices, such as a computer mouse, an input stylus, a trackpad, a trackball, a joystick, or the like. The mentioned physical input devices have in common that they are essentially used by a user's hand or hands.

However, external physical input devices have several drawbacks. They must be carried with the electronic device when travelling and may be easily forgotten or get lost. They can make the electronic device less portable and convenient to carry around, as they may require additional cables, power adapters, and space. They may require their own power source, which means the user needs to carry around an additional power adapter or rely on a nearby electrical outlet. They may require maintenance, such as cleaning or replacing batteries, which can add additional time and effort to the user's workflow. Adding too many external physical input devices can lead to a cluttered workspace, which can be distracting and make it harder to work efficiently.

One attempt to overcome the drawbacks of external physical input devices is based on the concept of a Touch User Interface (TUI). For example, a touchscreen may be used which allows the user to interact with content displayed on the screen by physically touching the screen with a fingertip, thereby replacing an external computer mouse. Operating systems (OS) typically provide application programming interfaces (API) which allow applications to integrate into and use the operating system's TUI. OS providers typically issue guidelines on how to design user interfaces, including TUIs, to meet their quality standards. Examples include Apple's Human Interface Guidelines (https://developer.apple.com/design/human-interface-guidelines), Google's Material Design (https://m3.material.io/), and Microsoft's Fluent (https://fluent2.microsoft.design/).

However, also touchscreens have several drawbacks. Touchscreens are prone to collecting fingerprints and smudges. Apart from hygienic concerns, this can be unsightly and make it difficult to see the contents on the screen. Touchscreens may not always accurately detect the user's touch, especially if the user has large or small fingers or is wearing gloves. Touchscreens can be more expensive than traditional screens, which can increase the overall cost of a device. Using a touchscreen can consume more battery power than using a traditional screen, as the screen needs to be constantly powered to detect the user's touch. Using a touchscreen can require the user to hold their arm in an uncomfortable position for extended periods of time, which can lead to fatigue and discomfort. Touchscreens may not be suitable for certain tasks, such as typing or precise drawing, which can require more precise input methods.

Furthermore, some OS user interfaces have traditionally been designed for use with physical input devices at a time when TUIs were not envisaged yet. As a result, their user interface elements are typically too small and not responsive for convenient and efficient use with touch control.

Accordingly, techniques for touchless user interface control have been devised. For example, US 2014/139430 A1 discloses a virtual touch method applied to a computer provided with a camera. The method includes defining a virtual touch plane in the space in front of the screen of the computer. A click is determined when a user's finger pierces through the virtual touch plane and then moves back again.

Another example is WO 2014/113454 A1 assigned to Leap Motion, Inc., which discloses techniques for dynamic free-space user interactions for machine control. A user can control an electronic device using gestures by interpreting the position, configuration or motion of control objects, such as a user's hand(s) or finger(s), in free space within a field of view of an image capture device.

However, further improvements of the known touchless user interface techniques are possible, especially in terms of efficiency and ergonomic factor.

It is therefore a technical problem underlying the present invention to provide an improved user interface for controlling computer devices, thereby overcoming the above-mentioned disadvantages of the prior art at least in part.

### SUMMARY OF INVENTION

The problem is solved by the subject-matter defined in the independent claims. Advantageous modifications of embodiments of the invention are defined in the dependent claims as well as in the description and the figures.

According to a first aspect of the present invention, it may be provided a method for controlling a virtual 3D object based on a touchless interaction system being associated with a computer device. The method may be computer-implemented. The method may comprise displaying the virtual 3D object by a display means being associated with the computer device. The method may comprise generating, in a second interaction mode and using the touchless interaction system, at least one pointer control command configured to move at least one pointer displayed on the display means in accordance with a free-space movement of at least one finger, preferably of the fingertip of the at least one finger, of a user, while the at least one finger is distanced from the display means. The method may comprise receiving, in the second interaction mode, a selection user input selecting a desired pointer functionality. The method may comprise based on the receiving and essentially for a period of time in which the selection user input is received: causing generating, using the touchless interaction system, at least one functionality-specific control command configured to control the virtual 3D object in accordance with the pointer functionality and in accordance with the free-space movement of the at least one finger of the user. The virtual 3D object may be displayed by a display means in 2D, preferably creating a 3D illusion, e.g., using autostereoscopy as described in more detail below.

Throughout the present disclosure, the term "computer-implemented method" may refer to a method executed by a computer device or system, typically involving software instructions. Throughout the present disclosure, the term "computer device" may refer to any electronic device capable of processing data and executing instructions. Computer devices may come in many forms, including desktop computers, laptops, tablets, and smartphones. Also, other types of devices such as television sets, in particular so-called smart TVs, set-top-boxes and gaming devices, also referred to as gaming consoles, are examples of computer devices. Furthermore, any type of other physical apparatus with at least some computing functionality may be referred to as a computer device, such as without limitation a computer device which is built into another higher-level electronic device such as a Virtual Reality device, a car, a vehicle and/or the like. Generally speaking, a computer device typically includes at least one central processing unit (CPU), at least one memory component, one or more input/output devices, and possibly various other components.

Said at least one central processing unit (CPU), at least one memory component and one or more input/output devices may function as follows: The CPU may be the central processing unit of the computer device and may be responsible for performing all the instructions and calculations that the device needs to execute. It may be essentially the "brain" of the computer device, and it may interpret and execute commands/instructions provided to it by a user or a device's software. The memory component of a computer device may be responsible for storing data and instructions that are required for the device's operation. This memory may be divided into two categories: temporary and permanent. Temporary memory may be used to store data that is needed only for a short period, while permanent memory may be used for long-term storage. Input/output devices may be used to interact with the computer device. Common input devices include mouses, trackpads, trackpoints, keyboards, touchbars and touchscreens, while common output devices include monitors, speakers, and printers. These devices allow the user to input data and commands into the device and receive output from the device. Various other components may be included in a computer device, such as graphics processing units, network interface cards, and storage devices like hard drives and solid-state drives. These components help to expand the capabilities of the device and allow it to perform more complex tasks. In summary, a computer device is an electronic device that is specifically designed to execute various computing tasks. It comprises components that are necessary for its operation.

Throughout the present disclosure, the term "control" may refer to the ability to manipulate or direct the behavior of the virtual 3D object. Specific examples may include adjusting the position, orientation, or properties of the virtual 3D object.

Throughout the present disclosure, the term "free-space movement" may refer to the movement of a user's finger or hand in the air, without touching any surface. Specific examples may include waving, pointing, or swiping gestures.

Throughout the present disclosure, the term "distanced" may refer to the spatial separation between the user's finger and the display means. Thus, the finger does not need to touch the display means.

Throughout the present disclosure, the term "pointer" may refer to a graphical element on the display means that indicates a position or selection. Specific examples may include a cursor, a hand icon, or a crosshair. Throughout the present disclosure, the term "pointer control command" may include instructions generated by the system to move a pointer on the display means based on user input. Specific examples may include cursor movement commands, selection commands, or drag-and-drop commands.

Throughout the present disclosure, the term "touchless" should be understood in relation to the electronic device or computer device. This means that a touchless interaction or a touchless user input does not necessarily mean that the user does not touch any objects or components of the electronic device or computer device in general, but that for the specific desired user interaction or user input, no touching of an input device intended for this purpose is required.

Touchless interaction may be facilitated through the use of sensor means that detect and interpret user movements and gestures. The sensor means may capture data related to the user's physical actions, which is then processed to generate corresponding virtual actions.

Throughout the present disclosure, the term "touchless interaction system" may refer to a hardware and software combination that enables an electronic device to recognize and interpret physical gestures carried out by a user without direct touch. This system may include, for example, cameras, infrared sensors, and other types of motion detection sensors that are capable of detecting the movement of a user's body part in free space.

For that, the touchless interaction system preferably includes or consists of sensor means. The sensor means may include one or more sensor devices. Groups of the one or more sensor devices may build a sensor array. An exemplary sensor means may comprise at least two sensor arrays, each sensor array including at least two sensor devices. The sensor devices may be devices capable of capturing sensor data, e.g., imaging data, but may also refer to supporting devices which support other sensor devices in enhancing the precision of capturing sensor data, e.g., an infrared projector. For example, one sensor array may include two infrared cameras and one infrared laser projector, thus the sensor array comprising three sensor devices in total. Further, it may be included a 2D RGB camera for adding color information to the sensor data. It may be provided that 3D image data obtained by 3D camera(s) are combined by 2D RGB image data obtained by a 2D RGB camera.

The sensor means may in particular be 3D imaging sensor means which may include sensor devices that are, alone or in combination with other sensor devices, capable of capturing three-dimensional images of an environment, in particular of objects such as a user's hand being the physical input object. There are several different types of 3D imaging sensor means, including time-of-flight (TOF) sensors, structured light sensors, and stereo vision sensors. TOF sensors work by emitting a light pulse and measuring the time it takes for the light to bounce back from an object, enabling them to create a three-dimensional map of the object's shape and distance. One example for said TOF sensors is a LiDAR sensor. Structured light sensors use a pattern of light and shadow, e.g., a projected pattern projected by a laser projector, and at least one camera to create a three-dimensional map of an object. Stereo vision sensors use at least two cameras to create a three-dimensional image by comparing the images captured by each camera. The cameras may for example be infrared cameras. The projector may for example be an infrared laser projector. Preferably, a projector is configured to emit light having a wavelength which is outside the human visible areas of wavelengths, thus not disturbing the user. Using a projector projecting a pattern generally increases the accuracy of captured sensor data.

The touchless interaction system may be configured to observe an interaction space comprising or being a 3D space in the nearfield of the electronic device in which the user may provide interaction input, i.e., free-space hand movement. The space may be a space between the user and the electronic device, in particular the display means. Generally, the interaction space may be within or equal to the field of view of the sensor means. The interaction space may have a spatial orientation and/or location that is particularly convenient for the user person for providing touchless interaction, i.e., free-space hand movements. It may be provided that the user is provided with a control option to adjust the spatial orientation and/or location of the interaction space.

The touchless interaction system may receive, in particular from sensor means, sensor data, i.e., data collected by sensor means. The sensor means may preferably include at least one imaging sensor device, as mentioned above, thus in this case, the sensor data includes image data. In a preferred embodiment, the sensor means is configured to capture a 3D image of an interaction space. The 3D image may be generated based on layering various sensor data from different sensor devices. In particular, the sensor means may include a depth sensor, such as at least one infrared sensor, facilitating creation of the 3D image. Said captured sensor data may be processed by the electronic device or computer device in order to generate the virtual representation behaving corresponding to the physical input object which may be the user's hand observed by the touchless interaction system.

Sensor means, in a preferred embodiment, may include at least one 3D camera providing the point cloud and/or voxel cloud and may include at least one 2D color camera, in particular 2D RGB camera, for adding color information to the point cloud and/or voxel cloud.

Throughout the present disclosure, the term "display means" may refer to any device or component capable of visually presenting information, such as a monitor, screen, or projector. Specific examples may include LCD screens, LED displays, or holographic projectors.

Throughout the present disclosure, the term "selection user input" may refer to an input provided by the user to select a specific functionality or option. Specific examples may include a gesture, a voice command, or a specific movement pattern.

Throughout the present disclosure, the term "pointer functionality" may refer to the specific actions or operations that the pointer can perform. Specific examples may include selecting objects, dragging items, or rotating views.

Throughout the present disclosure, the expression "for a period of time" should be understood as a duration during which a specific action or state is maintained. Specific examples may include time intervals measured in seconds or minutes.

Throughout the present disclosure, the term "functionality-specific control command" may include instructions generated to control specific functions of the virtual 3D object based on the selected pointer functionality. Specific examples may include commands to rotate, scale, or move the virtual 3D object.

The method described may allow for a more intuitive and natural interaction with virtual 3D objects by utilizing a touchless interaction system, which reduces the need for physical contact with the display means. This approach may enhance user experience by providing a seamless and fluid way to manipulate virtual objects, making the interaction more engaging and less cumbersome.

The use of free-space movement for pointer control may offer greater flexibility and precision in manipulating virtual 3D objects. Users can move their fingers freely in the air, which may result in more accurate and responsive control compared to traditional touch-based or mouse-based systems. This flexibility may be particularly beneficial in applications requiring fine motor skills or detailed adjustments, such as virtual design and modeling.

Furthermore, the method may enhance user experience by allowing for seamless switching between different pointer functionalities based on user input. This capability may enable more efficient control of virtual 3D objects, as users can quickly and easily change the pointer's behavior to suit different tasks. For example, a user might switch from a selection mode to a rotation mode without interrupting their workflow, thereby increasing productivity and reducing frustration.

The touchless interaction system may also reduce the risk of contamination and wear on physical devices, as it eliminates the need for direct contact. This advantage may be particularly important in environments where hygiene is critical, such as medical settings or public kiosks. By minimizing physical contact, the system may help maintain the cleanliness and longevity of the display means and other hardware components.

The method may also improve accessibility for users with physical disabilities, as it does not require precise touch or manipulation of physical controls. By enabling touchless interaction, the system may provide an inclusive solution that accommodates users with limited dexterity or mobility. This inclusivity may open up new opportunities for individuals with disabilities to engage with virtual environments and digital content.

It may be provided that the virtual 3D object is obtained by a medical diagnostic imaging procedure and the virtual 3D object preferably being an imaging, in particular a static imaging, of at least one body part of a human.

Throughout the present disclosure, the term "medical diagnostic imaging procedure" may refer to any method or technique used to create visual representations of the interior of a body for clinical analysis and medical intervention. Specific examples may include MRI (Magnetic Resonance Imaging), CT (Computed Tomography) scans, X-rays, and ultrasound imaging.

Throughout the present disclosure, the term "imaging" may refer to the process of creating visual representations of an object or body part. Specific examples may include photographs, scans, or digital renderings. Throughout the present disclosure, the term "static imaging" may refer to images that do not change over time, as opposed to dynamic or real-time imaging. Specific examples may include still images from MRI or CT scans.

Throughout the present disclosure, the term "body part" may refer to any anatomical component of a human being. Specific examples may include organs, bones, tissues, or specific regions such as the brain, heart, or limbs.

The method may provide significant advantages, for example, in the medical field by enabling the control and manipulation of virtual 3D objects obtained through medical diagnostic imaging procedures. This capability may enhance the accuracy and effectiveness of medical analyses and interventions. By allowing healthcare professionals to interact with detailed 3D representations of body parts, the method may facilitate better diagnosis, treatment planning, and patient education.

One of the primary advantages may be the ability to easily and efficiently work with obtained virtual 3D objects using a computer device which may be associated with various medical diagnostic imaging procedures. This flexibility may allow the method to be used with a wide range of imaging technologies, such as MRI, CT scans, X-rays, and ultrasound. As a result, the method may be applicable in numerous medical contexts, from routine check-ups to complex surgical planning.

Based on static imaging, which may offer high-resolution and detailed views of specific body parts, various important tasks can be performed, such as examining anatomical structures in detail, identifying abnormalities, and planning surgical procedures. By providing clear and precise images and the option of viewing them in detail, the method may improve the accuracy of medical diagnoses and interventions. The ability to manipulate virtual 3D objects representing body parts may also enhance the educational experience for both medical professionals and patients. Medical students and practitioners may benefit from interactive 3D models that allow for a deeper understanding of human anatomy and pathology. Patients, on the other hand, may gain a better understanding of their medical conditions and treatment options through visual aids, leading to improved communication and informed decision-making.

Additionally, the method may support remote consultations and telemedicine by enabling healthcare providers to share and interact with virtual 3D objects obtained from medical imaging procedures. This capability may facilitate collaboration among medical professionals, regardless of their physical location, and may improve access to specialized care for patients in remote or underserved areas.

Moreover, the method may enhance the efficiency of medical workflows by integrating touchless interaction with virtual 3D objects. This integration may reduce the need for physical contact with imaging devices and computer interfaces, thereby minimizing the risk of contamination and infection in medical environments. It may also streamline the process of analyzing and manipulating medical images, saving time and resources for healthcare providers.

It may be provided that the virtual 3D object is obtained by a product design and/or prototyping process, with the virtual 3D object preferably being a digital representation of a product or component. Throughout the present disclosure, the term "product design and prototyping process" may refer to any method or technique used to create, visualize, and test the design of a product before it is manufactured. Specific examples may include CAD (Computer-Aided Design) modeling, 3D scanning, and digital rendering.

Throughout the present disclosure, the term "design" may refer to the process of creating a plan or blueprint for a product or component. Specific examples may include sketches, CAD models, or digital renderings. Throughout the present disclosure, the term "prototyping" may refer to the process of creating a preliminary model or sample of a product to test and evaluate its design. Specific examples may include 3D-printed prototypes or virtual simulations.

Throughout the present disclosure, the term "product" may refer to any item that is designed and manufactured for use. Specific examples may include consumer electronics, automotive parts, industrial machinery, or household appliances.

The method may provide significant advantages in the field of product design and prototyping by enabling the control and manipulation of virtual 3D objects obtained through various design and prototyping processes. This capability may enhance the accuracy and efficiency of design iterations and evaluations. By allowing designers and engineers to interact with detailed 3D representations of products, the method may facilitate better design decisions, faster prototyping, and improved product development.

The present invention enables a user to easily and efficiently work with obtained virtual 3D objects using a computer device which may be associated with various design and prototyping technologies. This flexibility may allow the method to be used with a wide range of design tools, such as CAD software, 3D scanners, and digital rendering programs. As a result, the method may be applicable in numerous design contexts, from initial concept sketches to final product validation.

Based on detailed and high-resolution virtual 3D models, various important tasks can be performed, such as examining design features, identifying potential issues, and testing the functionality of components. By providing clear and precise visualizations and the option of viewing them in detail, the method may improve the accuracy of design evaluations and prototyping. The ability to manipulate virtual 3D objects representing products may also enhance the collaborative experience for design teams and stakeholders. Designers, engineers, and clients may benefit from interactive 3D models that allow for a deeper understanding of the product design and its potential improvements.

Additionally, the method may support collaboration and virtual design reviews by enabling team members to share and interact with virtual 3D objects obtained from design and prototyping processes. This capability may facilitate collaboration among design professionals, regardless of their physical location, and may improve the efficiency of design reviews and decision-making.

Moreover, the method may enhance the efficiency of design workflows by integrating touchless interaction with virtual 3D objects. This integration may reduce the need for physical contact with design tools and computer interfaces, thereby minimizing the risk of contamination and wear on physical devices. It may also streamline the process of analyzing and manipulating design models, saving time and resources for design teams.

By providing an intuitive and efficient way to interact with virtual 3D objects, the method may significantly improve the product design and prototyping process, leading to better-designed products, faster development cycles, and more successful outcomes.

It may be provided that the virtual 3D object is used in a quality control and/or inspection process, with the virtual 3D object preferably being a digital representation of a product or component. Throughout the present disclosure, the term "quality control and inspection process" may refer to any method or technique used to examine and verify the quality and integrity of a product or component. Specific examples may include 3D scanning, digital metrology, and non-destructive testing.

Throughout the present disclosure, the term "inspection" may refer to the process of examining a product or component to ensure it meets specified standards and requirements. Specific examples may include visual inspections, dimensional measurements, and defect detection. Throughout the present disclosure, the term "quality control" may refer to the procedures and processes used to maintain and improve the quality of products or components. Specific examples may include statistical process control, quality audits, and corrective actions.

The method may provide significant advantages in the field of quality control and inspection by enabling the control and manipulation of virtual 3D objects obtained through various inspection processes. This capability may enhance the accuracy and efficiency of quality assessments and defect detection. By allowing inspectors and quality engineers to interact with detailed 3D representations of products, the method may facilitate better identification of defects, measurement of dimensions, and verification of product specifications.

One of the primary advantages may be the ability to easily and efficiently work with obtained virtual 3D objects using a computer device which may be associated with various inspection technologies. This flexibility may allow the method to be used with a wide range of inspection tools, such as 3D scanners, digital calipers, and coordinate measuring machines (CMMs). As a result, the method may be applicable in numerous inspection contexts, from routine quality checks to complex failure analysis.

Based on detailed and high-resolution virtual 3D models, various important tasks can be performed, such as examining surface finishes, identifying dimensional deviations, and detecting internal defects. By providing clear and precise visualizations and the option of viewing them in detail, the method may improve the accuracy of quality assessments and inspections. The ability to manipulate virtual 3D objects representing products may also enhance the collaborative experience for quality control teams and stakeholders. Inspectors, engineers, and managers may benefit from interactive 3D models that allow for a deeper understanding of product quality and potential issues.

Additionally, the method may support remote inspections and virtual quality reviews by enabling team members to share and interact with virtual 3D objects obtained from inspection processes. This capability may facilitate collaboration among quality professionals, regardless of their physical location, and may improve the efficiency of quality reviews and decision-making.

Moreover, the method may enhance the efficiency of inspection workflows by integrating touchless interaction with virtual 3D objects. This integration may reduce the need for physical contact with inspection tools and computer interfaces, thereby minimizing the risk of contamination and wear on physical devices. It may also streamline the process of analyzing and manipulating inspection models, saving time and resources for quality control teams.

It may be provided that the virtual 3D object is used in a technical training process, with the virtual 3D object preferably being a digital representation of equipment, machinery, or components used in technical fields. Throughout the present disclosure, the term "technical training process" may refer to any method or technique used to educate and train individuals in the operation, maintenance, and repair of technical systems. Specific examples may include training simulations, interactive tutorials, and virtual workshops.

Throughout the present disclosure, the term "training" may refer to the process of teaching and learning specific skills and knowledge required for technical tasks. Specific examples may include hands-on practice, instructional videos, and guided exercises. Throughout the present disclosure, the term "technical" may refer to fields that involve the application of scientific and engineering principles. Specific examples may include mechanical engineering, electrical engineering, and information technology.

Throughout the present disclosure, the term "equipment" may refer to any machinery, tools, or devices used in technical fields. Specific examples may include industrial machines, electronic devices, automotive systems, or medical equipment.

The method may provide significant advantages in the field of technical training by enabling the control and manipulation of virtual 3D objects obtained through various training processes. This capability may enhance the effectiveness and engagement of training programs. By allowing trainees to interact with detailed 3D representations of equipment and components, the method may facilitate better understanding of technical concepts, procedures, and troubleshooting techniques.

One of the primary advantages may be the ability to easily and efficiently work with obtained virtual 3D objects using a computer device which may be associated with various training technologies. This flexibility may allow the method to be used with a wide range of training tools, such as virtual reality (VR) headsets, augmented reality (AR) devices, and interactive simulators. As a result, the method may be applicable in numerous training contexts, from basic skill development to advanced technical certifications.

Based on detailed and high-resolution virtual 3D models, various important tasks can be performed, such as simulating equipment operation, practicing maintenance procedures, and diagnosing technical issues. By providing clear and precise visualizations and the option of viewing them in detail, the method may improve the accuracy and retention of technical knowledge. The ability to manipulate virtual 3D objects representing equipment and components may also enhance the collaborative experience for training participants and instructors. Trainees and trainers may benefit from interactive 3D models that allow for a deeper understanding of technical systems and hands-on practice in a virtual environment.

Additionally, the method may support remote training and virtual classrooms by enabling participants to share and interact with virtual 3D objects obtained from training processes. This capability may facilitate collaboration among trainees and trainers, regardless of their physical location, and may improve the accessibility and flexibility of training programs.

Moreover, the method may enhance the efficiency of training workflows by integrating touchless interaction with virtual 3D objects. This integration may reduce the need for physical contact with training tools and computer interfaces, thereby minimizing the risk of contamination and wear on physical devices. It may also streamline the process of delivering and managing training content, saving time and resources for training providers. It may be provided that a touch-sensitive control surface is associated with the computer device. It may be further provided that in a first interaction mode, generating at least one control command configured to move the at least one pointer displayed on the display means based on touch input on the touch-sensitive control surface. It may be further provided that determining presence of an activation trigger causing switching from the first interaction mode to the second interaction mode, the activation trigger including a touch input on the touch-sensitive control surface comprising two or more touchpoints. It may be further provided that in response to the determining, switching from the first interaction mode to the second interaction mode. It may be further provided that remaining in the second interaction mode during a period of time in which the activation trigger is maintained, in particular in which the touch input on the touch-sensitive control surface comprises two or more touchpoints.

Throughout the present disclosure, the term "touch-sensitive control surface" may refer to a surface on or associated with the computer device at least partially being capable of detecting user touch inputs. This may include touchpads, touchscreens, trackpads, or any surface designed to respond to physical contact by a user's fingers or other objects. A touchpad may be a physical touchpad or a virtual touchpad. An example for a virtual touchpad is a touchpad displayed on a secondary touch display, e.g., arranged at a base portion of a laptop computer. The secondary touch display, in contrast to the display means, may display control elements for controlling the computer device. In particular, the control elements may change or appear upon determining presence of a gesture mode activation trigger or upon switching from the touch mode to a touchless gesture input mode. The control elements may include control elements like keyboard elements or computer mouse elements, such as right click, scroll, left click elements. The control elements may be displayed such as it is ergonomic for a user touching the control elements with a second hand which is not the hand which performs the free-space finger movement. For example, the control elements may be arranged in a curved manner. It may be provided that, in the touchless gesture input mode, the user's left-hand presses and holds a scroll control elements on the secondary touch display while performing a free-space finger movement with the user's right hand moving the index finger up and down which causes scrolling up or down or zooming in or out. For example, the user may move, in the touchless gesture input mode, the finger performing the free-space finger movement, to point on a specific control element displayed by the display means and at the same time, using the user's left hand, touching a left click control element on the second touch display causing performing a left click on the control element displayed on the display means.

Throughout the present disclosure, the term "first interaction mode" may refer to an initial mode of operation where control commands are generated based on touch input on the touch-sensitive control surface. Specific examples may include modes where users interact with the system by tapping, swiping, or pinching on a touchscreen.

Throughout the present disclosure, the expression "gesture mode activation trigger" may include any action or pattern of touch recognized by the computer device as an instruction to switch input modes. As such, this trigger might consist of specific touch patterns such as a simultaneous multi-finger or palm touch.

The technical advantages of the aforementioned features include improved control and versatility in user interactions with the computer device. It may allow users to seamlessly switch between touch input for finer control and gesture input for a more holistic and ergonomic interaction. This method may also reduce the effort required to perform complex commands, increasing efficiency and productivity. It may enhance accessibility for users with disabilities by offering an alternative mode of interaction. Additionally, this method may prevent inadvertent inputs by requiring specific gestures to switch modes, improving system reliability. Lastly, it may modernize the user interface experience, adapting to the evolving expectations of users who seek more fluid and dynamic interaction with their devices.

Throughout the present disclosure, the expression "remaining in the second interaction mode during a period of time" should be understood as maintaining the second interaction mode for a specific duration while the activation trigger is active. Specific examples may include time intervals measured in seconds or minutes.

The method may offer several technical advantages by incorporating a touch-sensitive control surface and providing a seamless transition between different interaction modes. This capability may enhance the overall user experience by allowing for flexible and intuitive control mechanisms. One significant advantage may be the ability to generate control commands based on touch input in the first interaction mode. This feature may provide users with a familiar and straightforward way to interact with the system, leveraging the widespread use of touch-sensitive devices such as smartphones and tablets. By supporting touch input, the method may cater to users who prefer or are accustomed to touch-based interactions.

The activation trigger that causes a switch from the first interaction mode to the second interaction mode may enable dynamic and context-sensitive interactions, allowing users to transition between different modes based on their needs and preferences. For example, a user might start with touch-based interactions and then switch to touchless interactions for more complex tasks or when physical contact is not feasible.

Furthermore, the use of multi-touch gestures as an activation trigger may enhance the robustness and reliability of the mode-switching mechanism. By requiring two or more touchpoints, the system may reduce the likelihood of accidental mode switches, ensuring that the transition occurs only when intended by the user. This feature may improve the overall usability and user satisfaction.

In response to detecting the activation trigger, the method may switch from the first interaction mode to the second interaction mode. This seamless transition may provide users with a smooth and uninterrupted experience, allowing them to continue their interactions without any noticeable delay or disruption. The ability to switch modes on-the-fly may be particularly beneficial in scenarios where users need to quickly adapt to different tasks or environments.

It may be provided seamlessly, during usage of the computer device, deciding between the first interaction mode and the second interaction mode based on detecting the occurrence of the activation trigger and switching accordingly from the first to the second interaction mode and vice versa.

Throughout the present disclosure, the term "seamlessly" may refer to a process or transition that occurs smoothly and without noticeable interruption or delay. Specific examples may include real-time mode switching that does not disrupt the user's interaction flow.

Throughout the present disclosure, the term "vice versa" may refer to the reverse or opposite situation. In this context, it means switching from the second interaction mode back to the first interaction mode.

One advantage may be the seamless transition between interaction modes during the usage of the computer device. This feature may ensure that users experience smooth and uninterrupted interactions, regardless of whether they are using touch-based or touchless input methods. The ability to switch modes seamlessly may be particularly beneficial in scenarios where users need to quickly adapt to different tasks or environments without experiencing any delays or disruptions.

The seamless mode-switching capability may also enhance the efficiency and productivity of the interaction process. By allowing users to switch modes without any noticeable delay, the method may reduce the cognitive load and effort required to interact with the system. This efficiency may be particularly valuable in professional settings where users need to perform tasks quickly and accurately.

Additionally, the method may improve the overall usability and user satisfaction by providing a consistent and predictable interaction experience. Users may benefit from the system's ability to seamlessly adapt to their input, ensuring that their interactions remain smooth and uninterrupted. This consistency may foster a positive user experience and increase overall satisfaction with the system.

It may be provided that the virtual 3D object is displayed in 3D, in particular as a holographic image, optionally wherein the computer device comprises eye tracking cameras facilitating displaying the virtual 3D object in 3D, in particular as a holographic image.

Throughout the present disclosure, the term "displayed in 3D" may refer to the presentation of an object in three dimensions, providing depth perception and spatial awareness. Specific examples may include stereoscopic displays, virtual reality headsets, and holographic projections. For that, autostereoscopy may be used. Autostereoscopy includes any technology of displaying stereoscopic images (adding binocular perception of 3D depth) without the use of special headgear, glasses, something that affects vision, or anything for eyes on the part of the viewer. Because headgear is not required, it is also called "glasses-free 3D" or "glassesless 3D". There are two broad approaches currently used to accommodate motion parallax and wider viewing angles: eye-tracking, and multiple views so that the display does not need to sense where the viewer's eyes are located. Examples of autostereoscopic displays technology include lenticular lens, parallax barrier, and may include Integral imaging, but notably do not include volumetric display or holographic displays.

Throughout the present disclosure, the term "eye tracking cameras" may refer to cameras or sensors capable of detecting and monitoring the movement and position of a user's eyes. The information obtained by said eye tracking cameras may be used, e.g., for performing autostereostcopy.

Overall, displaying in 3D may provide users with a more immersive and realistic representation of the object, enhancing their perception of depth and spatial relationships. By offering a three-dimensional view, the method may improve the user's ability to understand and interact with the virtual object, making the experience more engaging and intuitive.

It may be provided that selecting a desired pointer functionality is made based on a set of available pointer functionalities being selectable by the user.

The set of available pointer functionalities may include one or more of:
a) zoom in and zoom out the virtual 3D object or parts thereof,
b) grab and rotate the virtual 3D object or parts thereof,
c) drag and drop the virtual 3D object or parts thereof,
d1) define at least one cut plane within the virtual 3D object,
d2) shift the position of at least one cut plane within the virtual 3D object,
d3) display at least one cut view of the virtual 3D object based on a defined at least one cut plane within the virtual 3D object,
e) fade in and fade out parts of the virtual 3D object based on at least one fading rule,
f) show and hide at least one part of the virtual 3D object.

Throughout the present disclosure, the term "selecting" may refer to the process of choosing or picking a specific option or functionality from a set of available options. Specific examples may include clicking on a menu item, using a gesture, or issuing a voice command.

Throughout the present disclosure, the term "desired pointer functionality" may refer to the specific action or operation that the pointer is intended to perform. Specific examples may include zooming, rotating, dragging, or cutting.

Throughout the present disclosure, the term "set of available pointer functionalities" may refer to the collection of actions or operations that the pointer can perform, which are available for the user to select. Specific examples may include zooming, rotating, dragging, cutting, fading, and hiding.

Throughout the present disclosure, the term "zoom in and zoom out" may refer to the actions of increasing or decreasing the apparent size of the virtual 3D object or parts thereof. Specific examples may include magnifying or reducing the view of an object.

Throughout the present disclosure, the term "grab and rotate" may refer to the actions of selecting and turning the virtual 3D object or parts thereof around one or more axes. Specific examples may include rotating a model to view it from different angles.

Throughout the present disclosure, the term "drag and drop" may refer to the actions of selecting, moving, and placing the virtual 3D object or parts thereof to a different location. Specific examples may include repositioning an object within a virtual environment.

Throughout the present disclosure, the term "cut plane" may refer to an imaginary plane that can be defined within the virtual 3D object to create a cross-sectional view. Specific examples may include slicing through a model to reveal internal structures.

Throughout the present disclosure, the term "shift the position" may refer to the action of moving the defined cut plane to a different location within the virtual 3D object. Specific examples may include adjusting the position of the plane to view different cross-sections.

Throughout the present disclosure, the term "cut view" may refer to the visual representation of the virtual 3D object as seen through the defined cut plane. Specific examples may include cross-sectional images showing internal details.

Throughout the present disclosure, the term "fade in and fade out" may refer to the actions of gradually making parts of the virtual 3D object more or less visible based on a predefined rule. Specific examples may include adjusting the transparency of certain parts to highlight or de-emphasize them.

Throughout the present disclosure, the term "fading rule" may refer to the criteria or conditions that determine how parts of the virtual 3D object are faded in or out. Specific examples may include rules based on the object's properties, such as material type or importance.

Throughout the present disclosure, the term "show and hide" may refer to the actions of making parts of the virtual 3D object visible or invisible. Specific examples may include toggling the visibility of certain components to focus on specific details.

The above-described capabilities may significantly enhance the flexibility and customization of the interaction process, providing users with a wide range of options to control and manipulate the virtual 3D object.

In the particular example of an MRI image, the described range of pointer functionalities may provide significant technical advantages. In this medical use case, the virtual 3D object may be an MRI image of a human abdomen with a tumor in one kidney. The functionalities enhance the ability of medical professionals to interact with and analyze the MRI image, leading to improved diagnostic accuracy, treatment planning, and patient outcomes. In more detail:
The zoom in and zoom out functionality allows medical professionals to magnify or reduce the view of the MRI image of the human abdomen. This capability is crucial for examining the tumor in the kidney with greater detail and precision. By zooming in, doctors can closely inspect the tumor's size, shape, and boundaries, which is essential for accurate diagnosis and assessment. Conversely, zooming out provides a broader view of the entire abdomen, helping to understand the tumor's context within the surrounding organs and tissues. This dual capability ensures that medical professionals can seamlessly switch between detailed and holistic views, enhancing their ability to make informed decisions.

The grab and rotate functionality enables medical professionals to turn the MRI image of the abdomen around different axes. This capability is particularly valuable for visualizing the tumor from various angles, providing a comprehensive understanding of its spatial relationships with adjacent structures. For instance, rotating the image can reveal how the tumor interacts with blood vessels, the ureter, and other nearby organs. This 3D exploration aids in identifying potential complications and planning surgical approaches. By allowing doctors to view the tumor from multiple perspectives, the grab and rotate functionality enhances the accuracy of diagnosis and the effectiveness of treatment strategies.

The drag and drop functionality allows medical professionals to reposition the MRI image or specific parts of it within the virtual environment. This capability is useful for organizing and comparing different sections of the abdomen, facilitating a more structured analysis. For example, doctors can drag and drop the kidney with the tumor to a different location to compare it side-by-side with the healthy kidney. This comparative analysis helps in identifying abnormalities and assessing the extent of the tumor's impact. By providing a flexible and dynamic way to arrange the MRI images, the drag and drop functionality enhances the efficiency and clarity of the diagnostic process.

The ability to define at least one cut plane within the MRI image allows medical professionals to create cross-sectional views of the abdomen. This capability is essential for examining the internal structures of the kidney and the tumor. By defining a cut plane, doctors can slice through the MRI image to reveal detailed cross-sections, providing insights into the tumor's depth and internal composition. This functionality is particularly valuable for identifying the tumor's exact location and its relationship with surrounding tissues. The ability to create precise cut planes enhances the accuracy of the diagnosis and supports detailed surgical planning.

The functionality to shift the position of the cut plane within the MRI image allows medical professionals to adjust the location of the cross-sectional view dynamically. This capability is crucial for exploring different layers and regions of the abdomen. By shifting the cut plane, doctors can examine various sections of the kidney and the tumor, gaining a comprehensive understanding of its extent and impact. This dynamic exploration helps in identifying critical areas that require attention and supports the planning of targeted interventions. The ability to shift the cut plane enhances the thoroughness and precision of the diagnostic process.

The ability to display at least one cut view of the MRI image based on a defined cut plane provides medical professionals with detailed cross-sectional images of the abdomen. This functionality is essential for visualizing the internal structures of the kidney and the tumor in high resolution. By displaying cut views, doctors can analyze the tumor's internal characteristics, such as its density and texture, which are crucial for accurate diagnosis. This detailed visualization aids in identifying the tumor's type and stage, supporting the development of effective treatment plans. The ability to display cut views enhances the clarity and depth of the diagnostic process.

The fade in and fade out functionality allows medical professionals to gradually adjust the visibility of different parts of the MRI image based on predefined fading rules. This capability is valuable for highlighting specific areas of interest, such as the tumor, while de-emphasizing less relevant regions. For example, doctors can fade out surrounding tissues to focus on the tumor and its immediate environment. This selective visibility helps in isolating critical details and reducing visual clutter, enhancing the clarity of the analysis. By providing a dynamic way to control the visibility of different parts, the fade in and fade out functionality improves the focus and effectiveness of the diagnostic process.

The show and hide functionality enables medical professionals to toggle the visibility of specific parts of the MRI image. This capability is useful for isolating and examining particular structures, such as the tumor, without distractions from surrounding tissues. By hiding non-essential parts, doctors can focus exclusively on the tumor and its characteristics, facilitating a more detailed and accurate analysis. This functionality also supports comparative studies, where different parts of the image can be shown or hidden to highlight specific features. The ability to control the visibility of different parts enhances the precision and clarity of the diagnostic process.

It may be provided that the set of available pointer functionalities, preferably a pre-selection of available pointer functionalities, are provided to the user by a second display means including touch functionalities allowing the user to select the desired pointer functionality by touch input, preferably by pressing and holding the respectively desired pointer functionality, optionally wherein the second display means is integrated into or is adjacent to the touch-sensitive control surface, optionally wherein the second display means is integrated into a base portion of a laptop computer being the computer device, optionally wherein the set of available pointer functionalities displayed in a curved arrangement.

Throughout the present disclosure, the term "pre-selection" may refer to a subset of options or functionalities that are chosen or configured in advance for the user. Specific examples may include commonly used functions or user-defined preferences. A pre-selection may be made based on a suitable prediction. The prediction can be made dependent on displayed content or dependent on the type of the virtual 3D object. The prediction can be performed using a machine learning model and/or using a set of rules.

Throughout the present disclosure, the term "second display means" may refer to an additional display device or component that provides visual information and supports user interaction. Specific examples may include secondary screens, touch panels, or auxiliary displays.

Throughout the present disclosure, the term "touch functionalities" may refer to the capabilities of a display device to detect and respond to touch input. Specific examples may include capacitive touchscreens, resistive touch panels, and multi-touch interfaces.

Throughout the present disclosure, the term "pressing and holding" may refer to the action of applying continuous pressure on a touch-sensitive surface for a certain duration. Specific examples may include long-press gestures used to activate specific functions. Of course, pressing and holding encloses touching and resting, e.g., in case of a touch button.

Throughout the present disclosure, the term "integrated into or adjacent to" may refer to the physical placement or configuration of the second display means in relation to the touch-sensitive control surface. Specific examples may include built-in touch panels or external displays positioned next to the main control surface.

Throughout the present disclosure, the term "base portion" may refer to the lower part or foundation of a device, such as a laptop computer.

Throughout the present disclosure, the term "curved arrangement" may refer to the layout or positioning of elements in a curved or arc-like pattern. Specific examples may include semicircular or elliptical arrangements of icons or buttons.

The provision of a pre-selection of available pointer functionalities through a second display means may streamline the user interface by presenting only the most relevant or frequently used functionalities, reducing clutter and making it easier for users to find and select the desired pointer functionality. By offering a curated set of options, the method may improve the overall efficiency and usability of the system.

The inclusion of touch functionalities in the second display means may provide users with a familiar and intuitive way to interact with the system. By allowing users to select the desired pointer functionality through touch input, the method may leverage the widespread use of touchscreens and touch panels in modern devices. This familiarity may reduce the learning curve and make the system more accessible to a broader audience.

The ability to select the desired pointer functionality by pressing and holding may offer a convenient and reliable method for activating specific functions. This gesture-based interaction may provide users with precise control over their selections, reducing the likelihood of accidental activations. By requiring a continuous press, the method may ensure that only intentional inputs are registered, enhancing the overall accuracy and reliability of the interaction process.

The integration of the second display means into or adjacent to the touch-sensitive control surface may provide a seamless and cohesive user interface. By positioning the secondary display in close proximity to the main control surface, the method may facilitate quick and easy access to the available pointer functionalities. This integration may enhance the overall ergonomics and convenience of the system, allowing users to interact with both displays without significant hand movements or interruptions.

The optional integration of the second display means into the base portion of a laptop computer may offer additional advantages in terms of portability and space efficiency. By incorporating the secondary display into the laptop's base, the method may provide a compact and self-contained solution that does not require additional external devices. This integration may be particularly beneficial for users who need a portable and versatile system for on-the-go interactions.

The curved arrangement of the available pointer functionalities may provide an aesthetically pleasing and user-friendly layout. By arranging the functionalities in a curved pattern, the method may create a more natural and intuitive interface that aligns with the user's visual and motor preferences. This arrangement may enhance the overall user experience by making it easier to locate and select the desired pointer functionality.

It may be provided that if the selected pointer functionality includes zoom in and zoom out the virtual 3D object or parts thereof, the step of causing generating involves that the generated functionality-specific control commands are configured to zoom in and zoom out the virtual 3D object in accordance with the free-space movement of the at least one finger of the user. It may be further provided that zooming in is performed if the at least one finger of the user moves down, preferably in a direction towards and essentially orthogonal to the touch-sensitive control surface. It may be further provided that zooming out is performed if the at least one finger of the user moves up, preferably in a direction away from and essentially orthogonal to the touch-sensitive control surface, or vice versa.

It may be further provided that the selection user input includes pressing and holding a button or a touch control element. It may be further provided that the respective button or touch control element is preferably located on the second display means.

Throughout the present disclosure, the term "orthogonal" may refer to a direction that is at right angles to a given plane or surface. Specific examples may include movements perpendicular to the touch-sensitive control surface.

Throughout the present disclosure, the term "button or touch control element" may refer to an interactive component that can be pressed or touched to provide input. Specific examples may include physical buttons, virtual buttons on a touchscreen, or touch-sensitive areas.

The method described may offer advantages by providing users with a natural and responsive way to control the zoom level of the virtual object. By leveraging free-space movement, the method may offer a touchless and hygienic interaction mechanism that reduces the need for physical contact with the control surface which is particularly desirable in medical environments.

By providing a clear and consistent mapping between finger movements and zoom actions, the method may enhance the overall user experience and reduce the learning curve. The complementary movements of moving the finger up and down may provide users with a straightforward and predictable way to control the zoom level, allowing them to easily switch between zooming in and zooming out based on their needs. The ability to perform both actions through simple vertical movements may improve the efficiency and responsiveness of the interaction process.

The inclusion of a selection user input that involves pressing and holding a button or a touch control element may offer additional advantages in terms of control and precision. By requiring users to press and hold a specific control element to activate the zoom functionality, the method may reduce the likelihood of accidental zoom actions and ensure that only intentional inputs are registered. This feature may enhance the accuracy and reliability of the zooming process, providing users with greater confidence and control.

The optional placement of the button or touch control element on the second display means may further enhance the convenience and accessibility of the system. By integrating the control element into the secondary display, the method may provide users with a centralized and cohesive interface for selecting and activating pointer functionalities. This integration may improve the overall ergonomics and usability of the system, allowing users to interact with both displays seamlessly and efficiently.

It may be provided that if the selected pointer functionality includes grab and rotate the virtual 3D object or parts thereof, the step of causing generating involves that the generated functionality-specific control commands are configured to grab and rotate the virtual 3D object or parts thereof in accordance with the free-space movement of the at least one finger of the user. It may be further provided that grabbing and rotating is performed in accordance with the free-space finger movement while the selection user input includes pressing and holding a button or a touch control element.

It may be further provided that the respective button or touch control element is preferably located on the second display means.

The advantages described above with respect to the zooming in and out apply mut. mut. for grabbing and rotating. In particular, the method provides users with a natural and responsive way to control the orientation of the virtual 3D object. By that, e.g., a medical professional may be able to adjust the viewing angle such that currently relevant parts can be seen in a convenient manner.

It may be provided that if the selected pointer functionality includes defining, shifting and displaying a cut plane in accordance with d1), d2) and d3), the method includes that displaying a cut plane on a predetermined position of the virtual 3D object and preferably displaying, in addition to the virtual 3D object, a cut view of the cut plane. It may be further provided that the generated functionality-specific control commands are configured to shifting and/or rotating the cut plane within the virtual 3D object in accordance with the free-space movement of the at least one finger of the user, preferably depending on whether the finger moves up or down, e.g., in a direction essentially orthogonal to the touch-sensitive control surface. It may be further provided that the cut view is adapted in real time in accordance with the shifting and/or rotating.

It may be further provided that the selection user input includes pressing and holding a button or a touch control element. It may be further provided that the respective button or touch control element is preferably located on the second display means.

Throughout the present disclosure, the term "predetermined position" may refer to a specific location or orientation that is set in advance. Specific examples may include predefined coordinates or angles within the virtual 3D object.

The advantages described above with respect to the zooming in and out apply mut. mut. for defining, shifting and displaying a cut plane. In particular, the method provides users with a powerful tool for examining internal structures and cross-sections of the virtual 3D object. In other words: the user may be provided with an immediate and clear visual representation of the internal structures of the virtual 3D object, facilitating detailed examination and analysis. By displaying both the virtual object and the cut view, the method may offer a comprehensive and informative visualization that enhances the user's understanding of the object.

The ability to shift and/or rotate the cut plane based on the user's finger movement, preferably depending on whether the finger moves up or down in a direction essentially orthogonal to the touch-sensitive control surface, may enhance the naturalness and intuitiveness of the interaction. This directional movement may align with the user's natural hand gestures, making the shifting and rotating actions more intuitive and easy to perform. By providing a clear and consistent mapping between finger movements and cut plane adjustments, the method may enhance the overall user experience and reduce the learning curve.

The real-time adaptation of the cut view in accordance with the shifting and/or rotating of the cut plane may provide users with immediate feedback and dynamic visualization. This feature may ensure that the cut view is continuously updated to reflect the current position and orientation of the cut plane, allowing users to see the effects of their adjustments instantly. The real-time adaptation may enhance the interactivity and responsiveness of the system, making the examination process more efficient and engaging.

It may be provided that if the selected pointer functionality includes fade in and fade out parts of the virtual 3D object based on at least one fading rule, the method includes that displaying parts of the virtual 3D object which are faded in and not displaying parts of the virtual 3D object which are faded out. It may be further provided that the at least one fading rule includes distinguishing parts of the virtual 3D object based on their position with respect to a center of gravity or center of volume. It may be further provided that fading out is performed from outside the virtual 3D object towards the center of gravity or center of volume of the virtual 3D object and fading in is performed starting from the center of gravity or center of volume towards the outside of the virtual 3D object. It may be further provided that the at least one fading rule includes distinguishing parts of the virtual 3D object based on their density value, e.g., as measured by a magnetic resonance imaging (MRI). It may be further provided that fading out is performed starting from parts having a low density value towards parts having a high density value and fading in is performed starting from parts having a high density value towards parts having a low density value. It may be further provided that the generated functionality-specific control commands are configured to fade in and fade out in accordance with the free-space movement of the at least one finger of the user, preferably depending on whether the finger moves up or down, e.g., in a direction essentially orthogonal to the touch-sensitive control surface.

It may be further provided that the selection user input includes pressing and holding a button or a touch control element. It may be further provided that the respective button or touch control element is preferably located on the second display means.

Throughout the present disclosure, the term "center of gravity" may refer to the point in a body or system around which its mass or weight is evenly distributed or balanced. Specific examples may include the geometric center of a symmetrical object.

Throughout the present disclosure, the term "center of volume" may refer to the point in a body or system around which its volume is evenly distributed. Specific examples may include the centroid of a three-dimensional shape.

Throughout the present disclosure, the term "density value" may refer to the measure of mass per unit volume of a substance. Specific examples may include the density of tissues as measured by medical imaging techniques such as MRI.

The advantages described above with respect to the zooming in and out apply mut. mut. for fading in and out. In particular, the method provides users with a powerful tool for controlling the visibility of different parts of the virtual object. This feature may provide users with a clear and focused view of the relevant parts of the object, facilitating detailed examination and analysis. By controlling the visibility of different parts, the method may help users highlight important details and reduce visual clutter, enhancing the overall clarity and effectiveness of the visualization.

Distinguishing parts of the virtual 3D object based on their position with respect to a center of gravity or center of volume is a particular easy and intuitive way of distinguishing for fading. Thus, such a fading rule may offer a logical and intuitive way to control the visibility of different parts, allowing users to focus on specific regions of the object. By fading out parts from the outside towards the center and fading in parts from the center towards the outside, the method may provide a smooth and natural transition that aligns with the user's visual preferences. This may be particularly useful for mechanical assemblies viewed in CAD applications.

Similarly, the method may distinguish parts of the virtual 3D object based on their density value, as measured by techniques such as MRI. This fading rule may offer a valuable tool for examining the internal structures of the object, allowing users to focus on regions with specific density characteristics. By fading out parts with low density values and fading in parts with high density values, the method may provide a clear and detailed view of the object's internal composition, enhancing the user's understanding and analysis. This may be particularly useful in the medical field as the medical professionals are used to distinguish by tissue structure, e.g., between bones, blood, organs, fat tissue, skin layers. Of course, the present invention can be used not only in the field of human medicine, but also in veterinary medicine or even botany.

It may be provided that if the selected pointer functionality includes show and hide at least one part of the virtual 3D object, the method includes that displaying parts of the virtual 3D objects which are selected to be shown and not hidden. It may be further provided that parts of the virtual 3D object are detected by a machine learning model to facilitate selection by the user which parts to show and/or hide. It may be further provided that the generated functionality-specific control commands are configured to show or hide in accordance with the free-space movement of the at least one finger of the user, preferably depending on whether the finger points at a specific part to be shown or hidden and at the same time the selection user input includes pressing a button or a touch control element.

It may be further provided that the respective button or touch control element is preferably located on the second display means.

The advantages described above with respect to the fading in and out apply mut. mut. for showing and hiding. This capability may significantly enhance the flexibility and precision of the interaction process, providing users with a powerful tool for controlling the visibility of different parts of the virtual 3D object.

The method may comprise obtaining, using the touchless interaction system, sensor data associated with a physical input object, preferably being the user's hand or finger, wherein movement and shape of the first physical input object are continuously captured by the touchless interaction system and are included in the sensor data. The method may comprise generating, based on the sensor data, a virtual representation of the physical input object based on a point cloud and/or voxel cloud which is preferably derived from or included in the sensor data. The method may comprise displaying, using the display means, the virtual representation together with the virtual 3D object, wherein movement and shape of the virtual representation correspond to the movement and shape of the physical input object.

It may be provided that one or more further virtual input objects are captured by the touchless interaction system and corresponding virtual representations are displayed, wherein a virtual input object or a further virtual input object may include a user's hand or finger or a tool, such as a surgical tool, e.g., a scalpel or endoscope.

Throughout the present disclosure, the term "physical input object" may refer to an object whose movement and shape are being captured by the sensor means. This object may be any part of the user's body or any other physical item used to interact with the touchless interaction system. Specific examples of physical input objects may include a user's hand, finger, or any other body part, such as an arm or head. Preferably, as described above, the physical input object is the user's finger. In some cases, the physical input object may also include handheld items like a stylus or a tool, which are used to interact with the virtual environment.

Throughout the present disclosure, the term "movement and shape of the physical input object" may refer to the dynamic and static characteristics of the physical input object as detected by the sensor means. Movement may include any changes in the position or orientation of the physical input object over time, while shape may refer to the contours, dimensions, and overall form of the object. Specific examples may include the trajectory of a hand movement, the rotation of a finger, and the contour of a hand. The sensor means may capture these characteristics continuously to provide real-time data for generating virtual representations.

Throughout the present disclosure, the term "capture" may refer to the process of recording or obtaining data related to the physical input object using the sensor means. This process may involve detecting and measuring various attributes of the physical input object, such as its position, movement, and shape, and converting these measurements into digital data. Specific examples of capture may include the continuous recording of hand movements by a depth camera, the detection of finger gestures by an infrared sensor, and the tracking of body movements by a motion capture system. The captured data may be used to generate virtual representations and facilitate touchless interactions.

Throughout the present disclosure, the term "point cloud" may refer to a set of data points in space representing the physical input object. Each data point in the point cloud may have coordinates in a 3D space, typically represented by x, y, and z values. Point clouds may be generated by depth sensors or 3D cameras and provide a detailed spatial representation of the physical input object. Specific examples may include 3D coordinates captured by a depth camera, where each point corresponds to a specific location on the surface of the object. Point clouds may be used to create accurate digital models of physical objects, which can then be manipulated in a virtual environment.

Throughout the present disclosure, the term "voxel cloud" may include a volumetric representation of the physical input object, composed of voxels. Voxels, or volumetric pixels, are the 3D equivalent of pixels and represent values on a regular grid in three-dimensional space. A voxel cloud provides a detailed volumetric representation of the physical input object, capturing not only its surface but also its internal structure. Specific examples may include voxel data generated from depth sensor data, where each voxel represents a small volume of the physical object. Voxel clouds may be used for applications requiring detailed volumetric information, such as medical imaging, 3D modeling, and virtual reality.

Throughout the present disclosure, the term "virtual representation" may refer to a digital model or image that mimics the appearance and movement of a physical input object. Specific examples may include 3D models of a hand or surgical tool.

The method described above offers several technical advantages by incorporating the capability to obtain sensor data, generate virtual representations of physical input objects, and display these representations together with the virtual 3D object. This capability may significantly enhance the interactivity, precision, and realism of the interaction process, providing users with a powerful tool for controlling and manipulating virtual objects Further, collaborative work is facilitated as a second user may see directly on the display means where the user is pointing at.

The optional inclusion of one or more further virtual input objects may provide additional flexibility and versatility in the interaction process. By capturing and representing multiple input objects, such as additional hands, fingers, or tools, the method may support complex and collaborative interactions. For example, in a surgical planning scenario, multiple virtual tools such as scalpels and endoscopes can be represented and manipulated simultaneously, enhancing the precision and effectiveness of the planning process.

The ability to represent and control virtual tools, such as surgical instruments, may offer significant advantages in medical applications. By providing a realistic and interactive way to simulate surgical procedures, the method may enhance the training and preparation of medical professionals. This capability may improve the accuracy and safety of surgical interventions, leading to better patient outcomes.

According to a second aspect of the present invention, it may be provided a data processing apparatus, preferably an electronic device, more preferably a computer device, more preferably a laptop device, comprising means for carrying out the method according to the first aspect of the present invention.

If the data processing apparatus is a laptop device, it may comprise a base portion and a top portion being, preferably hingedly, connected to each other, wherein the display means is included in the top portion and the touch-sensitive control surface, and optionally the second display means, is included in the base portion.

According to a third aspect of the present invention, it may be provided a computer program or a computer-readable medium having stored thereon a computer program, the computer program comprising instructions which, when the program is executed by a computer, preferably according to the second aspect of the present invention, cause the computer to carry out the method according to the first aspect of the present invention.

All features, technical implementation details and advantages described with respect to any one of the aspects of the present invention described herein are self-evidently mutatis mutandis applicable for any one of the other aspects of the present invention and vice versa.

### BRIEF DESCRIPTION OF THE DRAWINGS

The disclosure may be better understood by reference to the following drawings:
- Fig. 1a:: A first part of a flowchart showing steps of a method in accordance with embodiments of the present disclosure.
- Fig. 1b:: A second part of a flowchart showing steps of a method in accordance with embodiments of the present disclosure.
- Fig. 2:: A further flowchart showing steps of a method in accordance with embodiments of the present disclosure.
- Fig. 3:: A scene where a user is interacting with a computer device in accordance with an exemplary embodiment of the present disclosure.
- Fig. 4:: A scene where a user is interacting with a computer device in accordance with an exemplary embodiment of the present disclosure.
- Fig. 5:: A scene where a user is interacting with a computer device in accordance with an exemplary embodiment of the present disclosure.
- Fig. 6:: A scene where a user is interacting with a computer device in accordance with an exemplary embodiment of the present disclosure.
- Fig. 7:: A scene where a user is interacting with a computer device in accordance with an exemplary embodiment of the present disclosure.
- Fig. 8:: A scene where a user is interacting with a computer device in accordance with an exemplary embodiment of the present disclosure.
- Fig. 9:: A scene where a user is interacting with a computer device in accordance with an exemplary embodiment of the present disclosure.
- Fig. 10:: A scene where a user is interacting with a computer device in accordance with an exemplary embodiment of the present disclosure.

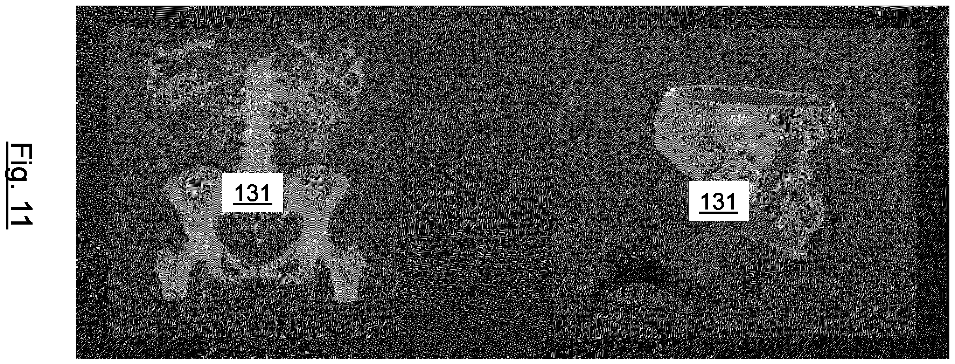

- Fig. 11:: Examples of virtual 3D objects in accordance with exemplary embodiments of the present disclosure.
- Fig. 12:: An illustration of a virtual 3D object in accordance with an exemplary embodiment of the present disclosure.
- Fig. 13:: An illustration of a virtual 3D object in accordance with an exemplary embodiment of the present disclosure.
- Fig. 14:: An illustration of a virtual 3D object in accordance with an exemplary embodiment of the present disclosure.
- Fig. 15:: An illustration of a virtual 3D object in accordance with an exemplary embodiment of the present disclosure.
- Fig. 16:: An illustration of a virtual 3D object in accordance with an exemplary embodiment of the present disclosure.
- Fig. 17:: An illustration of a virtual 3D object in accordance with an exemplary embodiment of the present disclosure.
- Fig. 18:: An illustration of a virtual 3D object in accordance with an exemplary embodiment of the present disclosure.
- Fig. 19:: An illustration of a virtual 3D object in accordance with an exemplary embodiment of the present disclosure.
- Fig. 20:: An illustration of a virtual 3D object in accordance with an exemplary embodiment of the present disclosure.
- Fig. 21:: An illustration of a virtual 3D object in accordance with an exemplary embodiment of the present disclosure.
- Fig. 22:: An illustration of a virtual 3D object in accordance with an exemplary embodiment of the present disclosure.
- Fig. 23:: An illustration of a virtual 3D object in accordance with an exemplary embodiment of the present disclosure.
- Fig. 24:: An illustration of a virtual 3D object in accordance with an exemplary embodiment of the present disclosure.

### DETAILED DESCRIPTION

In the following, representative embodiments illustrated in the accompanying drawings will be explained. It should be understood that the illustrated embodiments and the following descriptions refer to examples which are not intended to limit the embodiments to one preferred embodiment.

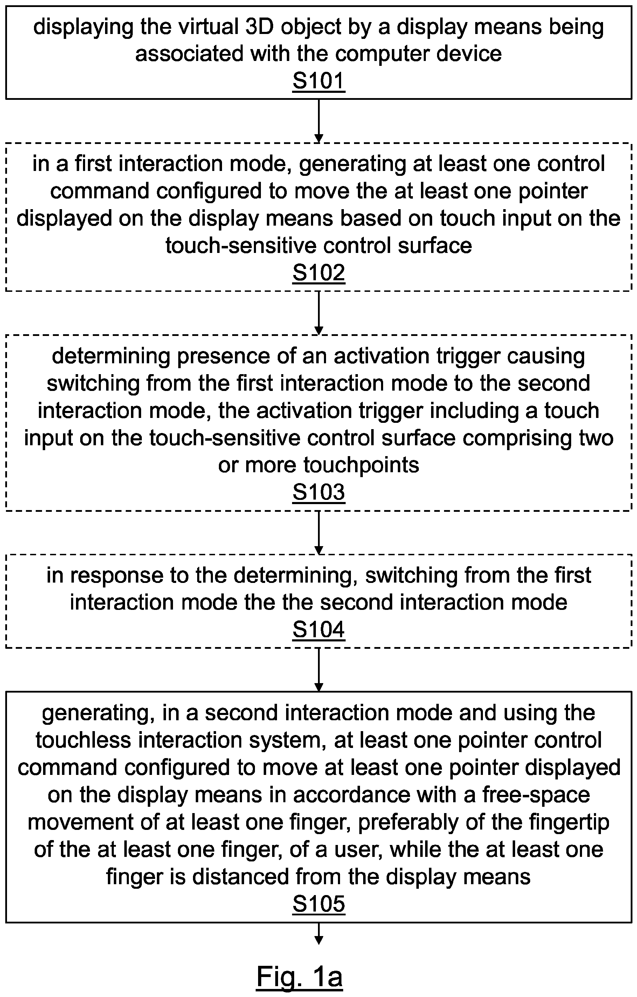

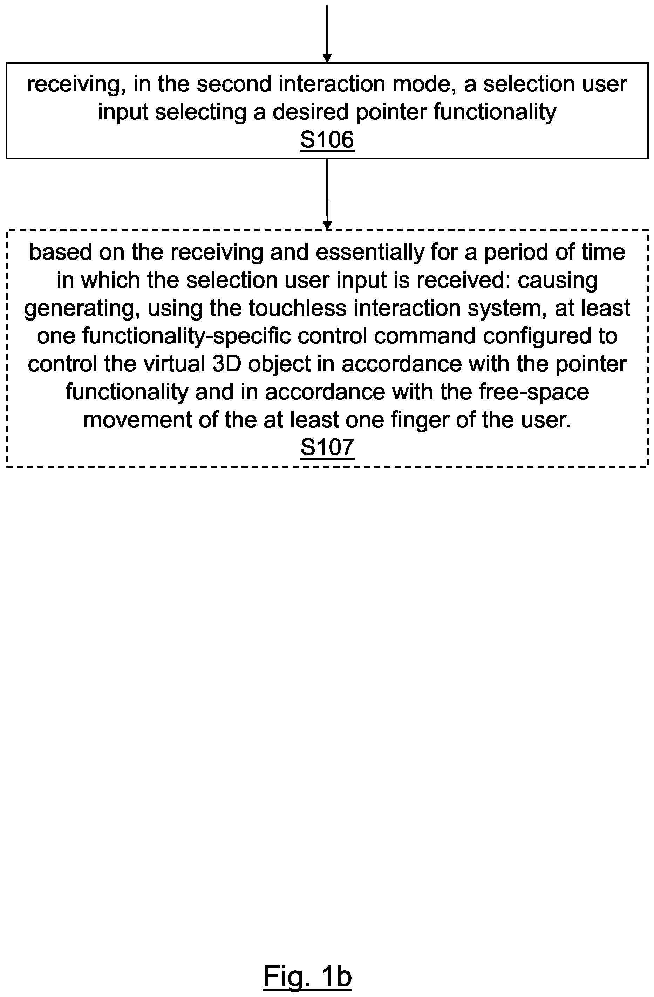

Figures 1a and 1b together show a flowchart comprising steps of a method in accordance with an embodiment of the present disclosure. Steps in dashed lines may be optional steps in a particularly preferred embodiment.

Step S101 comprises displaying S101 the virtual 3D object 131 by a display means 130 being associated with the computer device 110. Step S102 comprises in a first interaction mode, generating S102 at least one control command configured to move the at least one pointer displayed on the display means 130 based on touch input on the touch-sensitive control surface 140. Step S103 comprises determining presence S103 of an activation trigger causing switching from the first interaction mode to the second interaction mode, the activation trigger including a touch input on the touch-sensitive control surface 140 comprising two or more touchpoints. Step S104 comprises in response to the determining, switching S104 from the first interaction mode the the second interaction mode. Step 105 comprises generating S105, in a second interaction mode and using the touchless interaction system 120 , at least one pointer control command configured to move at least one pointer displayed on the display means 130 in accordance with a free-space movement of at least one finger 150, preferably of the fingertip of the at least one finger 150 , of a user, while the at least one finger 150 is distanced from the display means. Step S106 comprises receiving S106, in the second interaction mode, a selection user input selecting a desired pointer functionality. Step 107 comprises based on the receiving and essentially for a period of time in which the selection user input is received: causing generating S107, using the touchless interaction system 120, at least one functionality-specific control command configured to control the virtual 3D object 131 in accordance with the pointer functionality and in accordance with the free-space movement of the at least one finger 150 of the user.

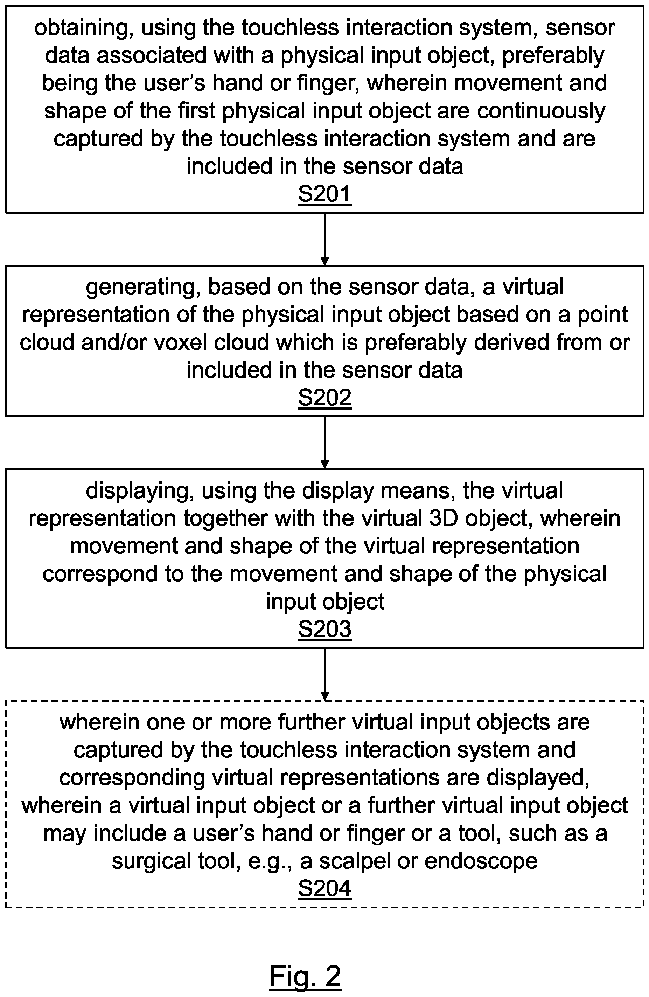

Figure 2 shows a flowchart showing steps of a method in accordance with a preferred embodiment of the present disclosure. Step S201 includes obtaining S201, using the touchless interaction system 120, sensor data associated with a physical input object 160, preferably being the user's hand or finger, wherein movement and shape of the physical input object 160 are continuously captured by the touchless interaction system 120 and are included in the sensor data. Step S202 includes generating S202, based on the sensor data, a virtual representation 170 of the physical input object 160 based on a point cloud and/or voxel cloud which is preferably derived from or included in the sensor data. Step S203 includes displaying S203, using the display means 130, the virtual representation 170 together with the virtual 3D object 131, wherein movement and shape of the virtual representation correspond to the movement and shape of the physical input object 160. Step S204 includes that optionally wherein one or more further virtual input objects are captured S204 by the touchless interaction system 120 and corresponding virtual representations 170 are displayed, wherein a virtual input object or a further virtual input object may include a user's hand or finger or a tool, such as a surgical tool, e.g., a scalpel or endoscope.

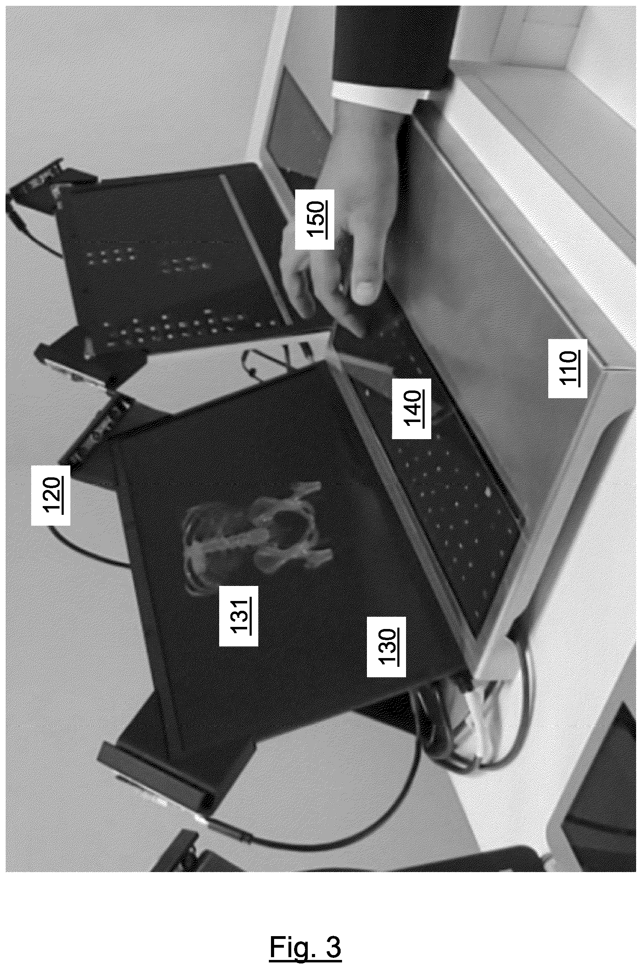

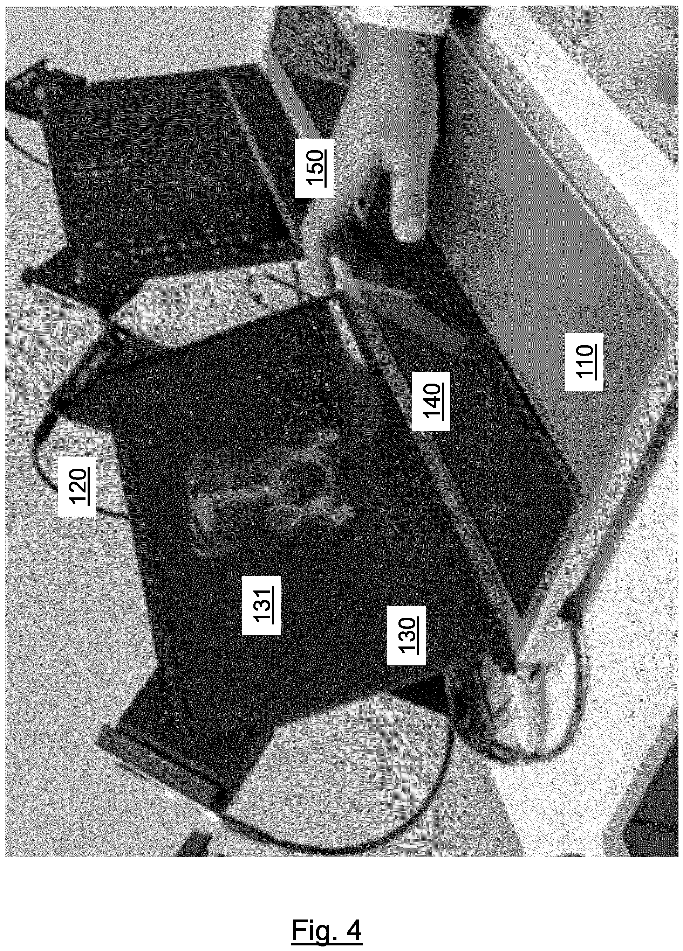

Figure 3 shows a scene where a user is interacting with a computer device 110. The user provides touch input to the touch-sensitive input surface 140. The touch-sensitive input surface 140 is a touchpad being integrated in a second display means in the base portion of a laptop. In figure 4, in contrast to figure 3, the user touches two touchpoints on the touchpad which is recognized by the computer device 110 as an activation trigger for switching into the second mode of interaction. Thus, the computer device 110 operates in the second mode of interaction, in particular activating the touchless interaction system 120. The finger 150 of the user provides user input. The display means 130 displays a virtual 3D object 131.

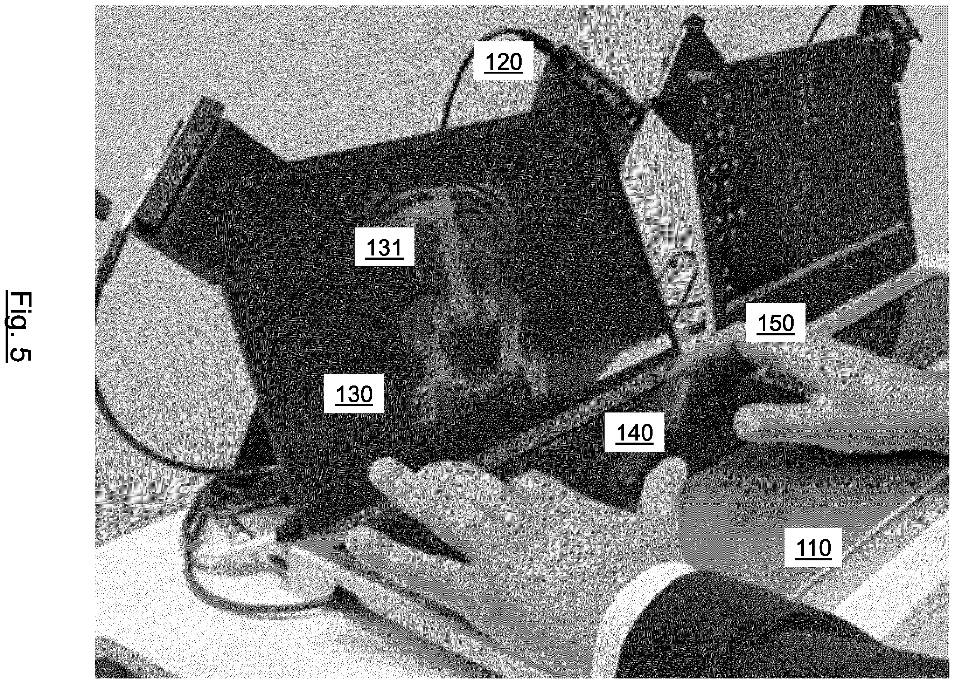

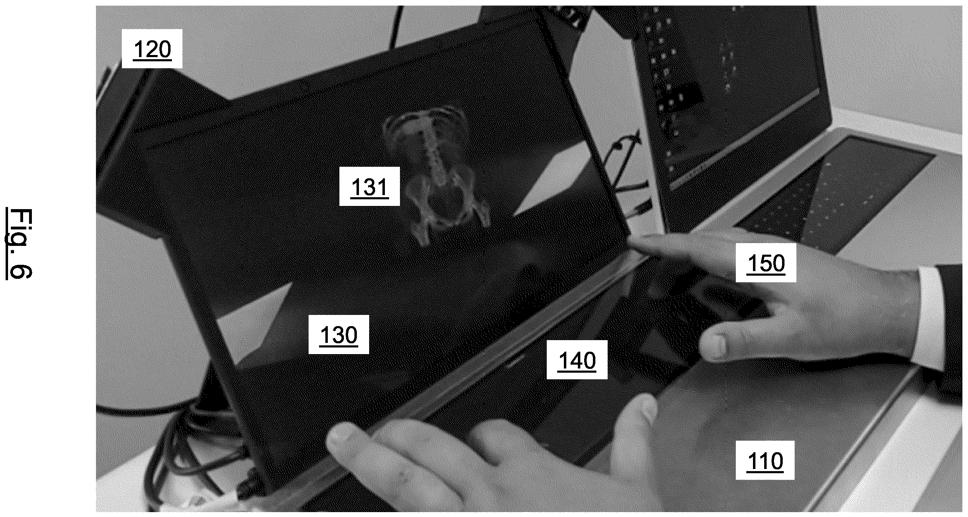

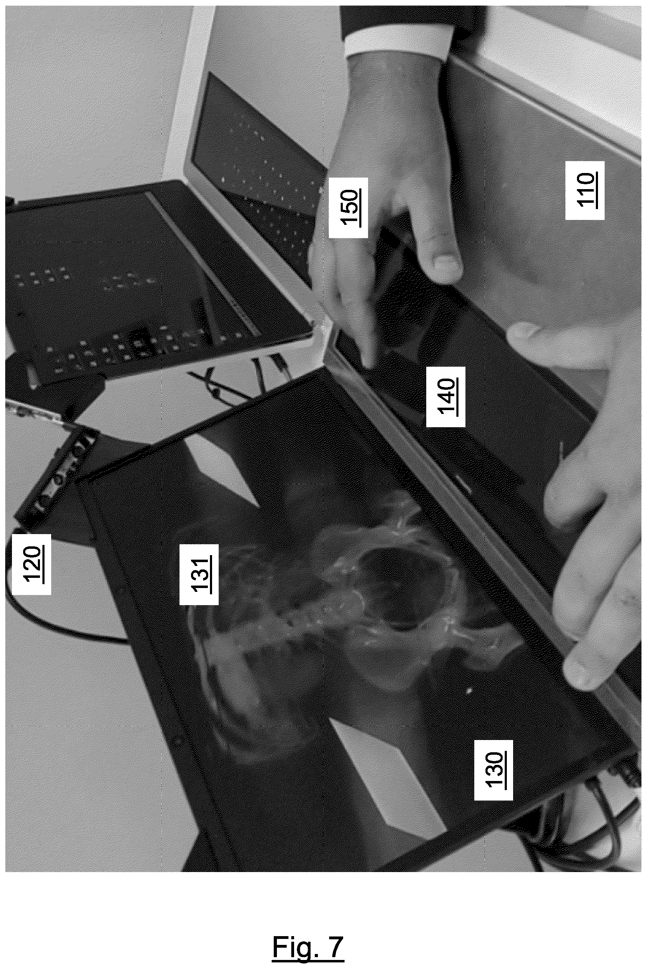

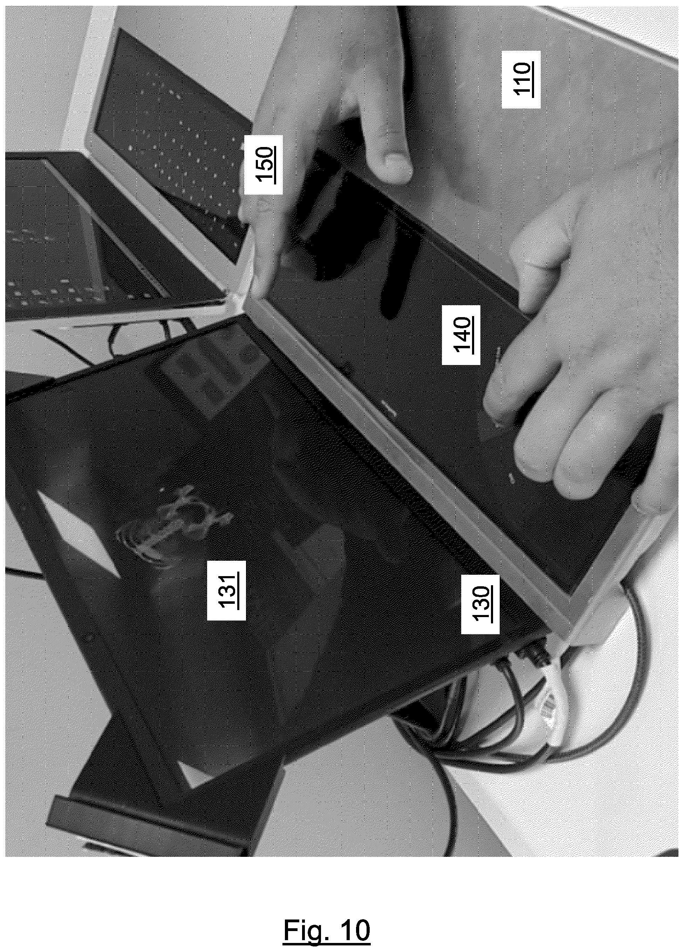

In figures 4, 5, 6 and 7, different scenes are shown where different levels of zoom are applied. For zooming, the user is triggering a respective control element using the left hand. This can be seen in more detail in figure 10 where the user presses and holds a middle touch button on the second display means and at the same time moves his right-handed finger 150 up and down in order to cause zooming.

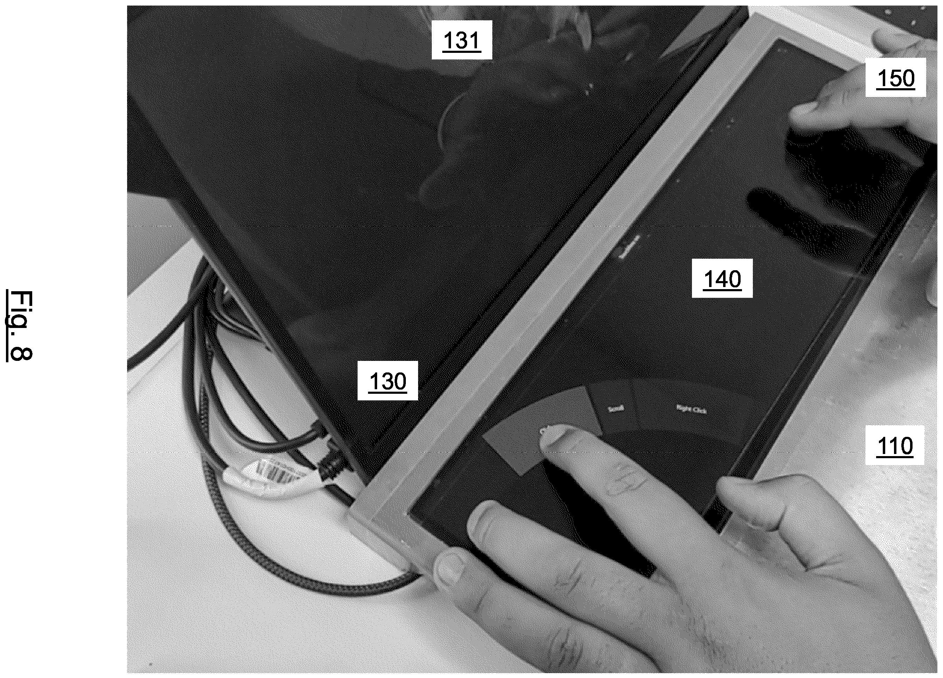

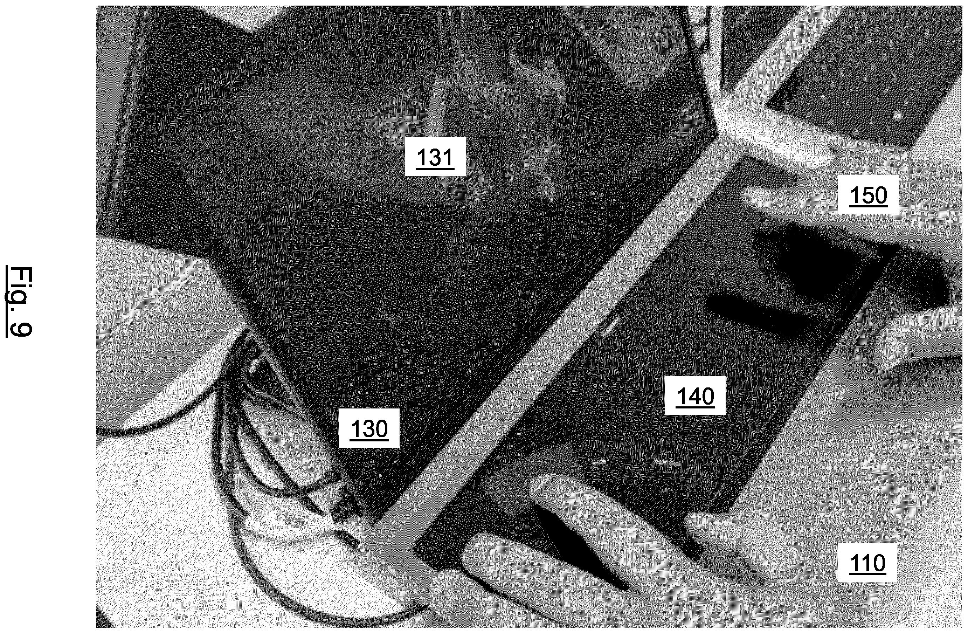

In figures 8 and 9 different scenes are shown where the virtual 3D object 131 is rotated. As shown in detail in figure 9, the user presses and holds a curvedly arranged control element on the second display means by the index finger of the left hand, and at the same time the user uses the right-handed finger 150 to cause rotation of the virtual 3D object.

As far as the examples disclosed herein mention certain functionalities associated with the user's right hand and other functionalities with the user's left hand, the skilled person will understand that this is just exemplarily. Accordingly, the functionalities may also be provided vice versa, e.g., for left-handed persons, or in yet other configurations.

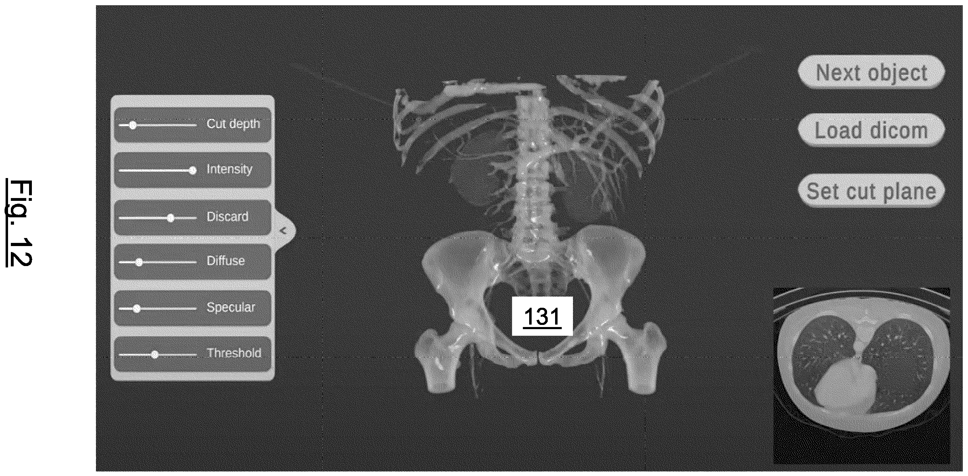

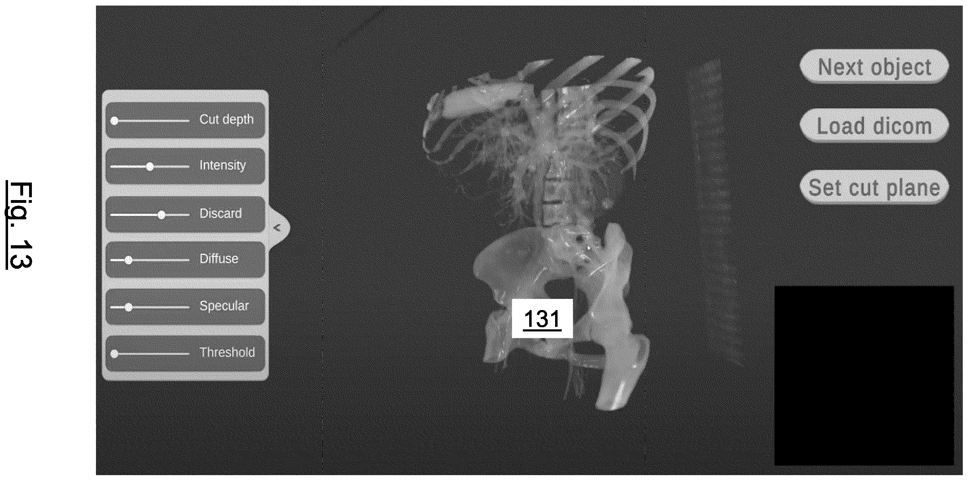

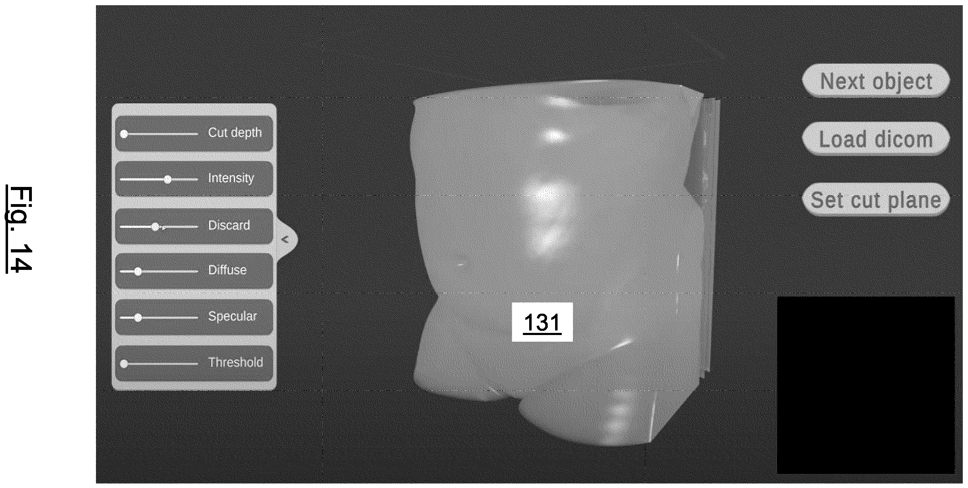

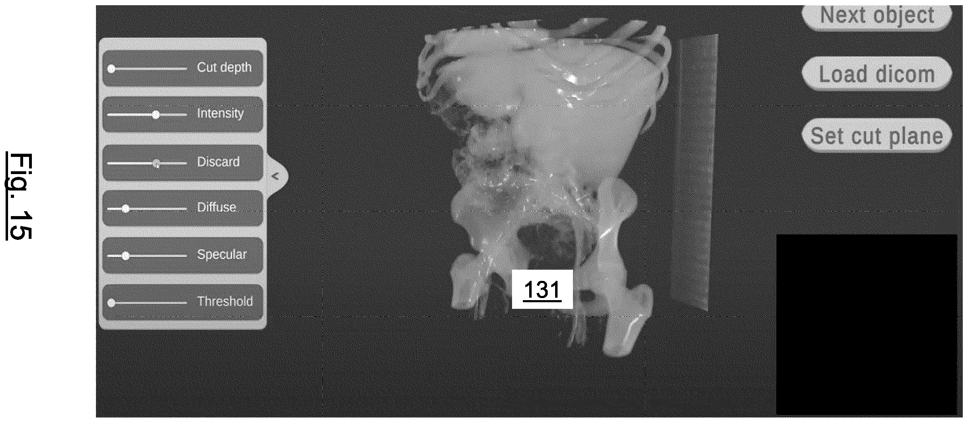

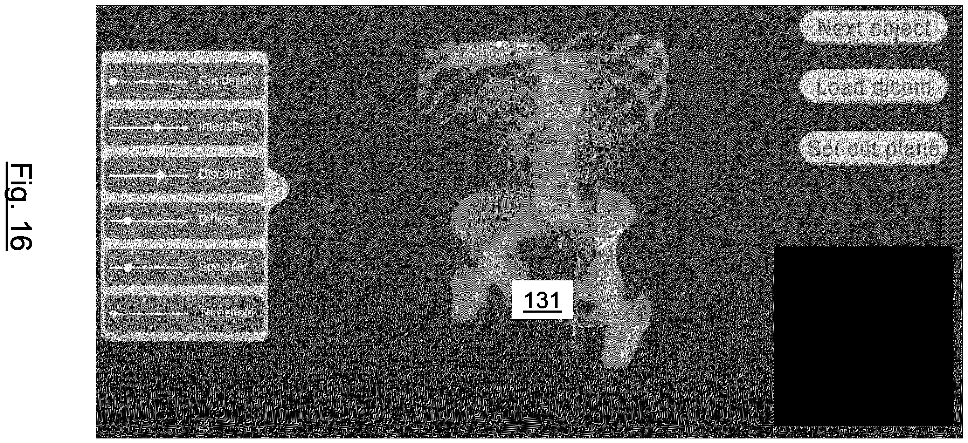

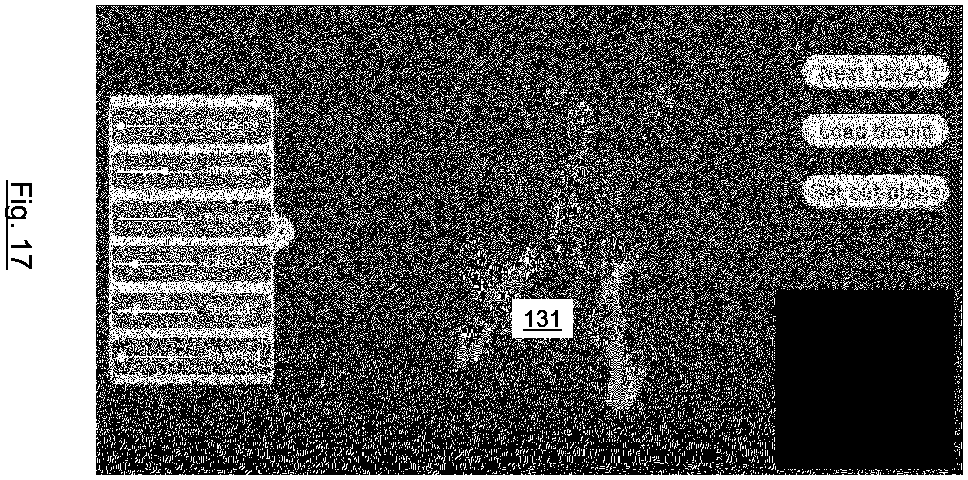

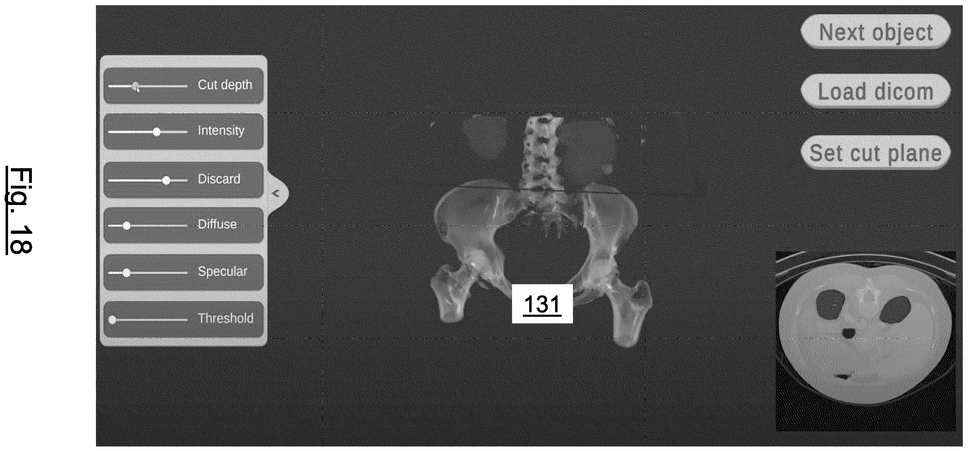

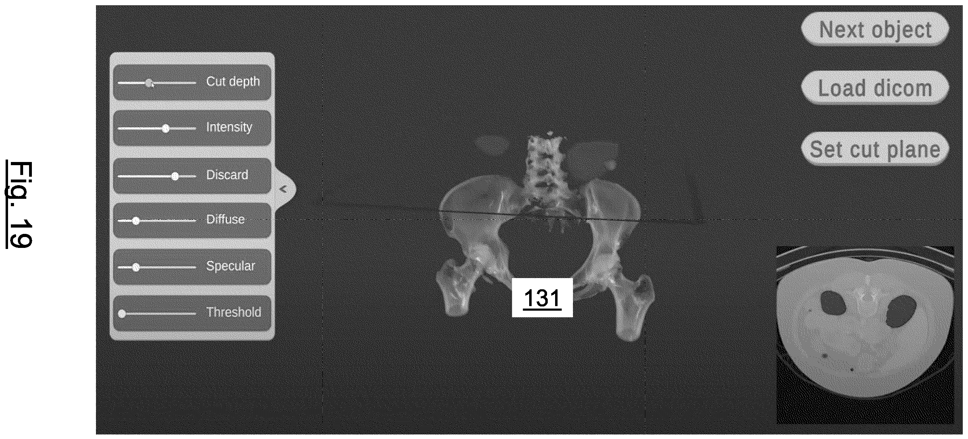

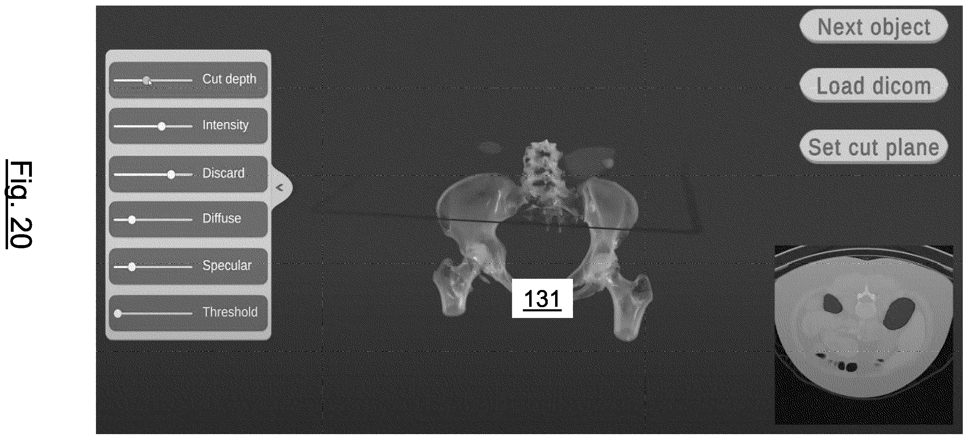

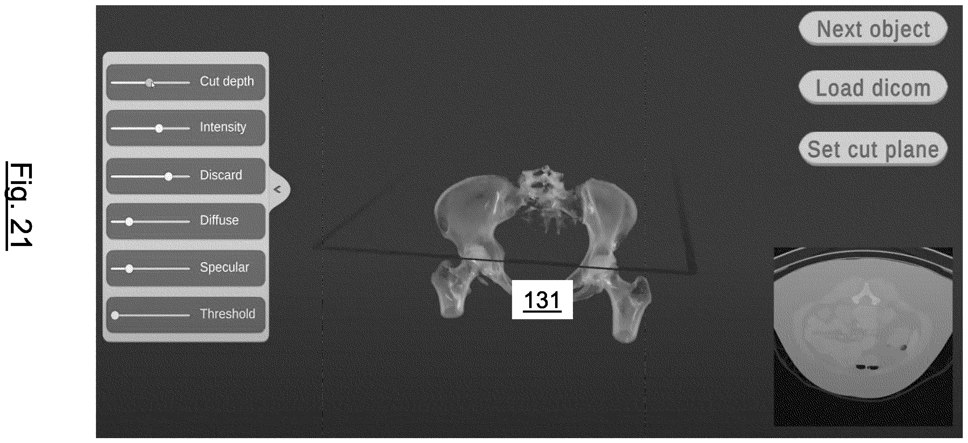

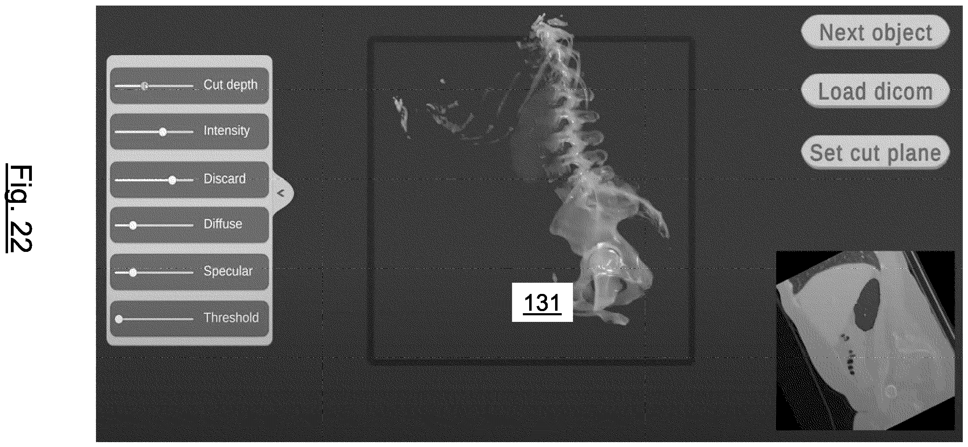

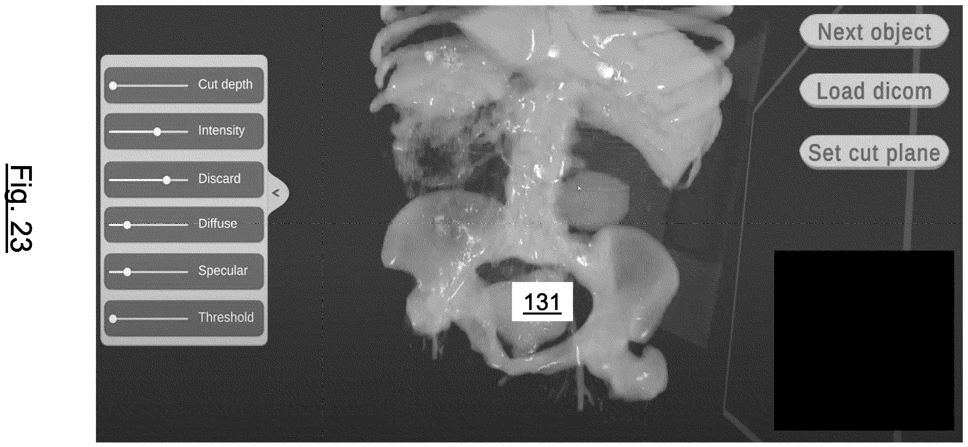

Figures 12 and 13 show illustrations of a virtual 3D object 131 as it may be shown by a display means 130 of a computer device. 110. Figure 14, 15, 16 and 17 show different levels of fading based on density measures via MRI as described in more detail above. Figures 18, 19, 20, 21 and 22 show illustrations of a cut plane creating a cross-sectional view. In figure 22, the orientation of the cur plane is changed in vier of figures 18-21. In figures 18-21 the cut plane is moved. Figure 23 shows a possible optimal view generated by means of the present disclosure in order to support medica professionals to decide on a surgery and/or plan a surgery.

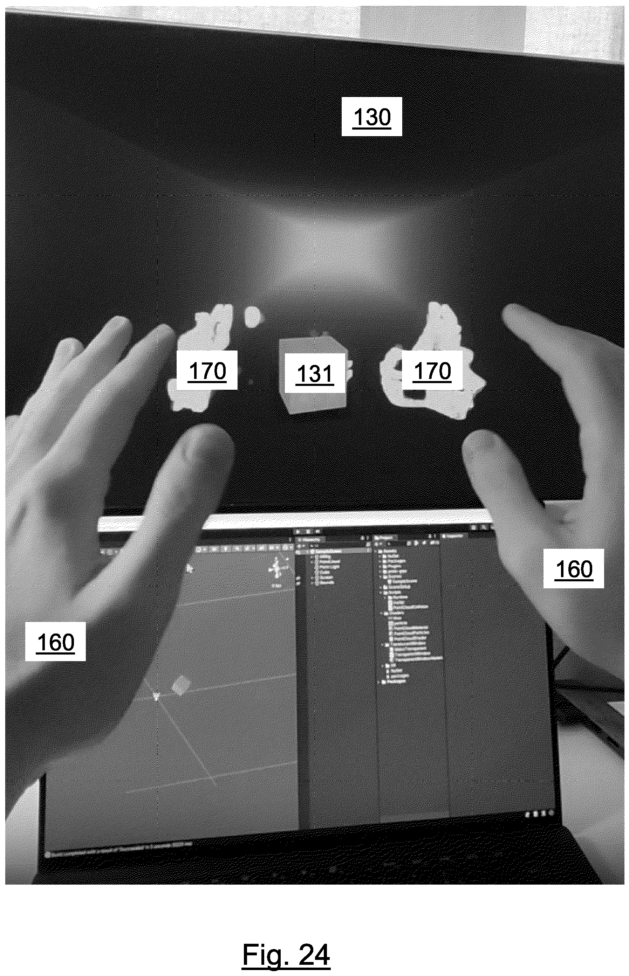

Figure 24 displays user's hands as virtual input objects displayed by the display means 130 in addition to the virtual 3D object 131.

In the following, several examples of application scenarios are given for the sake of better understanding the value of the present disclosure:

### Example A)

A team of cardiologists and cardiac surgeons is planning a complex surgery to correct a congenital heart defect in a pediatric patient. The defect involves multiple structural abnormalities, including a ventricular septal defect (VSD) and an abnormal positioning of the great arteries. The present invention is used to facilitate detailed preoperative planning and ensure precise execution of the surgical procedure.

The team loads high-resolution MRI and echocardiography images of the patient's heart into the system. The touchless interaction system captures the movement and shape of the lead surgeon's hand and fingers, allowing for intuitive control of the virtual 3D heart model.

The lead surgeon begins by using the zoom in and zoom out functionality to closely examine the VSD and the abnormal positioning of the great arteries. By moving their finger in free space, the surgeon can magnify the view of the heart's internal structures, providing a detailed visualization of the defects.

The team uses the grab and rotate functionality to turn the heart model around different axes. This allows them to view the defects from various angles, revealing the spatial relationships between the VSD, the great arteries, and other cardiac structures. The team lead explains the importance of understanding these relationships to avoid complications during surgery.

To further analyze the defects, the team defines multiple cut planes within the heart model using the define at least one cut plane functionality. This creates cross-sectional views of the heart, providing insights into the size and location of the VSD and the positioning of the great arteries. The team dynamically shifts the position of the cut planes to explore different layers of the heart, ensuring a comprehensive understanding of the defects.

The fade in and fade out functionality is used to highlight the VSD and the great arteries while de-emphasizing surrounding tissues. By adjusting the visibility of different parts, the team can focus on the critical areas that need surgical correction, reducing visual clutter and enhancing clarity.

Team members provide input using voice commands, such as "Show the coronary arteries," to ensure that critical structures are not compromised during surgery. The show and hide functionality is used to isolate and examine specific regions, such as the septum and the aorta, facilitating detailed analysis and discussion.

Based on the interactive session and the input from team members, the system generates a detailed surgery plan. The plan includes step-by-step instructions for the surgical procedure, highlighting key actions such as incisions, defect closure, and repositioning of the great arteries. The system also estimates the time needed for each step, providing a comprehensive time estimation for the entire surgery.

The detailed preoperative planning facilitated by the present invention ensures that the surgical team is well-prepared, leading to a successful and precise correction of the congenital heart defect. The patient's recovery is smooth, and the risk of complications is minimized.

### Example B)

A team of orthopedic surgeons is preparing for a complex surgery to repair a comminuted fracture in a patient's femur. The fracture involves multiple bone fragments and requires precise alignment and fixation. The present invention is used to facilitate detailed preoperative planning and ensure precise execution of the surgical procedure.

The team loads high-resolution CT scans of the patient's femur into the system. The touchless interaction system captures the movement and shape of the lead surgeon's hand and fingers, allowing for intuitive control of the virtual 3D femur model.

The lead surgeon begins by using the zoom in and zoom out functionality to closely examine the fracture and the bone fragments. By moving their finger in free space, the surgeon can magnify the view of the femur, providing a detailed visualization of the fracture pattern and the position of the bone fragments.

The team uses the grab and rotate functionality to turn the femur model around different axes. This allows them to view the fracture from various angles, revealing the spatial relationships between the bone fragments and the surrounding tissues. The team lead explains the importance of understanding these relationships to ensure proper alignment and fixation during surgery.

To further analyze the fracture, the team defines multiple cut planes within the femur model using the define at least one cut plane functionality. This creates cross-sectional views of the femur, providing insights into the size and location of the bone fragments. The team dynamically shifts the position of the cut planes to explore different layers of the femur, ensuring a comprehensive understanding of the fracture.

The fade in and fade out functionality is used to highlight the bone fragments while de-emphasizing surrounding tissues. By adjusting the visibility of different parts, the team can focus on the critical areas that need surgical intervention, reducing visual clutter and enhancing clarity.

Team members provide input using voice commands, such as "Show the muscle attachments," to ensure that critical structures are not compromised during surgery. The show and hide functionality is used to isolate and examine specific regions, such as the fracture site and the adjacent joints, facilitating detailed analysis and discussion.

Based on the interactive session and the input from team members, the system generates a detailed surgery plan. The plan includes step-by-step instructions for the surgical procedure, highlighting key actions such as fragment alignment, fixation with plates and screws, and post-operative care. The system also estimates the time needed for each step, providing a comprehensive time estimation for the entire surgery.

The detailed preoperative planning facilitated by the present invention ensures that the surgical team is well-prepared, leading to a successful and precise repair of the complex fracture. The patient's recovery is smooth, and the risk of complications is minimized.

### Example C)

A team of orthopedic surgeons is preparing for a complex spinal surgery to correct severe scoliosis in a young patient. The surgery involves realigning the spine and inserting rods and screws to stabilize it. The present invention is used to facilitate detailed preoperative planning and ensure precise execution of the surgical procedure.

The team loads a high-resolution MRI scan of the patient's spine into the system. The touchless interaction system captures the movement and shape of the lead surgeon's hand and fingers, generating a virtual representation of these physical input objects.

The lead surgeon uses the zoom in and zoom out functionality to closely examine the curvature of the spine and identify the exact locations where corrections are needed. The grab and rotate functionality allows the team to view the spine from various angles, providing a comprehensive understanding of the deformity.

The team defines multiple cut planes to create cross-sectional views of the spine at different levels. This helps in identifying the precise locations for screw insertion and rod placement. The fade in and fade out functionality is used to highlight the vertebrae and de-emphasize surrounding tissues, enhancing clarity.

Team members provide input using voice commands, such as "Show the nerve pathways," to ensure that critical structures are not compromised during surgery. The show and hide functionality is used to isolate and examine specific vertebrae and intervertebral discs.

The system generates a detailed surgery plan, including the sequence of actions and estimated time for each step. The plan is reviewed and adjusted based on the team's expertise, ensuring that the surgery is well-coordinated and efficient.

The detailed preoperative planning facilitated by the present invention ensures that the surgical team is well-prepared, leading to a successful and precise correction of the spinal deformity. The patient's recovery is smooth, and the risk of complications is minimized.

### Example D)

A medical university uses the present invention to provide virtual training for neurosurgical residents. The system allows residents to practice complex procedures on virtual 3D models of the brain, enhancing their skills and confidence before performing actual surgeries.

The system is loaded with high-resolution MRI and CT scans of the brain, creating a detailed virtual 3D model. The touchless interaction system captures the residents' hand movements, generating virtual representations of their hands.

Residents use the zoom in and zoom out functionality to examine different regions of the brain in detail. The grab and rotate functionality allows them to explore the brain from various angles, understanding the spatial relationships between different structures.

The system provides a library of common neurosurgical procedures, such as tumor resection and aneurysm clipping. Residents use the define cut plane functionality to create cross-sectional views of the brain, practicing precise cuts and manipulations.

The system provides real-time feedback on the residents' actions, highlighting any errors or deviations from the optimal procedure. The fade in and fade out functionality is used to focus on critical structures, ensuring that residents understand the importance of avoiding damage to these areas.

The system records the residents' performance, allowing instructors to review and provide feedback. Residents can repeat procedures, refining their skills and improving their accuracy and confidence.

The virtual training provided by the present invention enhances the residents' skills and confidence, preparing them for real-life neurosurgical procedures. The hands-on practice and real-time feedback ensure that they are well-equipped to handle complex surgeries with precision and care.

### Example E)

A multidisciplinary tumor board, consisting of oncologists, radiologists, surgeons, and pathologists, uses the present invention to collaboratively plan the treatment for a patient with a complex tumor. The system facilitates detailed analysis and discussion, leading to a comprehensive and personalized treatment plan.

The system is loaded with high-resolution MRI and PET scans of the patient's tumor. The touchless interaction system captures the movement and shape of the team members' hands, generating virtual representations.

The lead oncologist uses the zoom in and zoom out functionality to examine the tumor's size, shape, and metabolic activity. The grab and rotate functionality allows the team to view the tumor from various angles, understanding its relationship with surrounding tissues.

The team defines cut planes to create cross-sectional views of the tumor, analyzing its internal structure and identifying areas of high metabolic activity. The fade in and fade out functionality is used to highlight the tumor and de-emphasize non-relevant tissues.

Team members provide input using voice commands, such as "Show the lymph nodes," to assess potential metastasis. The show and hide functionality is used to isolate and examine specific regions, facilitating detailed discussion and analysis.

The system generates a comprehensive treatment plan, including surgical resection, chemotherapy, and radiation therapy. The plan includes detailed steps and estimated time for each treatment phase. The team reviews and adjusts the plan based on their expertise, ensuring a personalized and effective treatment strategy.

The collaborative tumor board meeting facilitated by the present invention ensures that the patient receives a comprehensive and personalized treatment plan. The detailed analysis and discussion enhance the accuracy and effectiveness of the treatment, leading to improved patient outcomes and quality of life.

### Example F)

In a scenario where a team of medical professionals is planning a surgery to eliminate a tumor in a patient's kidney, the present invention provides a powerful and interactive tool to facilitate detailed planning and collaboration. This detailed description outlines how the system can be used to enhance the surgical planning process, incorporating additional input and processing capabilities to create a comprehensive surgery plan and time estimation.

The team of medical professionals, including surgeons, radiologists, and anesthesiologists, gathers in a state-of-the-art conference room equipped with a data processing apparatus capable of performing a method as described above. This apparatus includes a laptop device with a high-resolution display, a touch-sensitive control surface, and a second display means. The system is integrated with a touchless interaction system that captures sensor data associated with physical input objects, such as the users' hands and fingers.

The team lead, a senior surgeon with extensive experience in oncological surgeries, begins by loading the MRI image of the patient's abdomen into the system. The MRI image clearly shows the tumor located in one of the kidneys. The touchless interaction system continuously captures the movement and shape of the team lead's hand and finger, generating a virtual representation of these physical input objects based on a point cloud or voxel cloud derived from the sensor data.

Using the touchless interaction system, the team lead interacts with the virtual 3D object (the MRI image) displayed on the laptop's screen. The virtual representation of the team lead's hand appears on the screen, allowing for intuitive and precise control of the virtual 3D object. This virtual hand mimics the exact movements and gestures of the team lead's physical hand, providing a seamless and natural interaction experience.

The team lead begins by zooming in on the kidney with the tumor using the zoom in and zoom out functionality. By moving their finger in free space, the team lead can magnify the view of the tumor, providing a detailed visualization of its size, shape, and boundaries. This close-up view helps the team understand the tumor's characteristics and its relationship with surrounding tissues, which is crucial for accurate diagnosis and surgical planning.

Next, the team lead uses the grab and rotate functionality to turn the MRI image around different axes. This allows the team to view the tumor from various angles, revealing its spatial relationships with nearby structures such as blood vessels and the ureter. The team lead explains the importance of avoiding these critical structures during surgery, highlighting potential challenges and considerations for the surgical approach.

To further analyze the tumor, the team lead defines a cut plane within the MRI image using the define at least one cut plane functionality. This creates a cross-sectional view of the kidney, providing insights into the tumor's depth and internal composition. The team lead dynamically shifts the position of the cut plane to explore different layers of the kidney, ensuring a comprehensive understanding of the tumor's extent. This dynamic exploration helps identify critical areas that require attention and supports the planning of targeted interventions.

The team lead also uses the fade in and fade out functionality to highlight the tumor while de-emphasizing surrounding tissues. By adjusting the visibility of different parts, the team can focus on the tumor and its immediate environment, reducing visual clutter and enhancing clarity. This selective visibility helps in isolating critical details, making it easier for the team to assess the tumor's characteristics and plan the surgical procedure.

During the session, other team members provide additional input and suggestions. The system is capable of processing voice commands, allowing team members to interact with the virtual 3D object hands-free. For example, a radiologist might say, "Show the blood vessels around the tumor," and the system responds by adjusting the visualization to highlight the relevant structures. This voice interaction capability enhances the efficiency and convenience of the planning process, allowing team members to contribute without interrupting the flow of the session.

The team lead also uses the show and hide functionality to toggle the visibility of specific parts of the MRI image. By pointing at different regions and pressing a button on the second display means, the team lead can isolate and examine critical areas, such as the tumor's interface with the kidney's outer layer. This functionality allows for a focused and detailed examination, ensuring that all relevant aspects of the tumor and surrounding tissues are thoroughly analyzed.

Based on the interactive session and the input from team members, the system generates a detailed surgery plan. The plan includes step-by-step instructions for the surgical procedure, highlighting key actions such as incisions, tumor removal, and suturing. The system also estimates the time needed for each step, providing a comprehensive time estimation for the entire surgery. This time estimation is based on various factors, including the complexity of the tumor, the proximity to critical structures, and the team's input on the expected duration of each surgical action.

The system uses advanced machine learning algorithms to analyze historical data from previous surgeries and provide accurate time estimates. This analysis includes factors such as the surgeon's experience, the patient's condition, and the specific characteristics of the tumor. The resulting time estimation helps the team to schedule the surgery efficiently, ensuring that adequate time is allocated for each step and minimizing the risk of complications.

The team reviews the generated surgery plan and time estimation, making any necessary adjustments based on their expertise and experience. The system allows for real-time updates and modifications, ensuring that the final plan is accurate and tailored to the patient's specific condition. The team lead concludes the session by summarizing the key points and confirming the surgery plan with the team. The interactive and collaborative nature of the system ensures that all team members are aligned and prepared for the upcoming surgery.

Certain embodiments of the invention may be based on using a machine-learning model or machine-learning algorithm. Machine learning may refer to algorithms and statistical models that computer systems may use to perform a specific task without using explicit instructions, instead relying on models and inference. For example, in machine-learning, instead of a rule-based transformation of data, a transformation of data may be used that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g., sensor data, meta data and/or image data) may be preprocessed to obtain a feature vector, which is used as input to the machine-learning model.

Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e., each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g., a classification algorithm, a regression algorithm or a similarity learning algorithm). Classification algorithms may be used when the outputs are restricted to a limited set of values (categorical variables), i.e., the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters. Reinforcement learning is a third group of machine-learning algorithms that may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e., outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g., a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g. be used to store, manipulate or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g., based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g., of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e., support vector networks) are supervised learning models with associated learning algorithms that may be used to analyze data (e.g., in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some or all of the method steps may be executed by (or using) a hardware apparatus, such as a processor, a microprocessor, a programmable computer or an electronic circuit. Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments of the invention provide a data carrier having electronically readable control signals, which are capable of cooperating with a programmable computer system, such that one of the methods described herein is performed.

Generally, embodiments of the invention can be implemented as a computer program (product) with a program code, the program code being operative for performing one of the methods when the computer program product runs on a computer. The program code may, for example, be stored on a machine-readable carrier. Other embodiments comprise the computer program for performing one of the methods described herein, stored on a machine-readable carrier. In other words, an embodiment of the present invention is, therefore, a computer program having a program code for performing one of the methods described herein, when the computer program runs on a computer.

A further embodiment of the invention provides a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention provides a data stream or a sequence of signals representing the computer program for performing one of the methods described herein. The data stream or the sequence of signals may, for example, be configured to be transferred via a data communication connection, for example, via the internet.

A further embodiment of the invention provides a processing means, for example, a computer or a programmable logic device, configured to, or adapted to, perform one of the methods described herein.

A further embodiment of the invention provides a computer having installed thereon the computer program for performing one of the methods described herein.

A further embodiment of the invention provides an apparatus or a system configured to transfer (e.g., electronically or optically) a computer program for performing one of the methods described herein to a receiver. The receiver may, for example, be a computer, a mobile device, a memory device, or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

## Claims

1. A computer-implemented method for controlling a virtual 3D object (131) based on a touchless interaction system being associated with a computer device (110), the method comprising:
displaying (S101) the virtual 3D object (131) by a display means (130) being associated with the computer device (110);
generating (S105), in a second interaction mode and using the touchless interaction system (120) , at least one pointer control command configured to move at least one pointer displayed on the display means (130) in accordance with a free-space movement of at least one finger (150), preferably of the fingertip of the at least one finger (150) , of a user, while the at least one finger (150) is distanced from the display means (130);
receiving (S106), in the second interaction mode, a selection user input selecting a desired pointer functionality; and
based on the receiving and essentially for a period of time in which the selection user input is received: causing generating (S107), using the touchless interaction system (120), at least one functionality-specific control command configured to control the virtual 3D object (131) in accordance with the pointer functionality and in accordance with the free-space movement of the at least one finger (150) of the user.

2. The computer-implemented method of claim 1, wherein the virtual 3D object (131) is obtained by a medical diagnostic imaging procedure and the virtual 3D object (131) preferably being an imaging, in particular a static imaging, of at least one body part of a human.

3. The computer-implemented method of any one of the preceding claims, wherein a touch-sensitive control surface (140) is associated with the computer device (110), wherein the method comprises, prior to generating at least one pointer control command:
in a first interaction mode, generating (S102) at least one control command configured to move the at least one pointer displayed on the display means (130) based on touch input on the touch-sensitive control surface (140);
determining presence (S103) of an activation trigger causing switching from the first interaction mode to the second interaction mode, the activation trigger including a touch input on the touch-sensitive control surface (140) comprising two or more touchpoints;
in response to the determining, switching (S104) from the first interaction mode the the second interaction mode;
optionally, remaining in the second interaction mode during a period of time in which the activation trigger is maintained, in particular in which the touch input on the touch-sensitive control surface (140) comprises two or more touchpoints.

4. The computer-implemented method of claim 3, the method further comprising:
seamlessly, during usage of the computer device (110), deciding between the first interaction mode and the second interaction mode based on detecting the occurrence of the activation trigger and switching accordingly from the first to the second interaction mode and vice versa.

5. The computer-implemented method of any one of the preceding claims, wherein the virtual 3D object (131) is displayed in 3D, in particular as a holographic image, optionally wherein the computer device (110) comprises eye tracking cameras facilitating displaying the virtual 3D object (131) in 3D, in particular as a holographic image.

6. The computer-implemented method of any one of the preceding claims, wherein selecting a desired pointer functionality is made based on a set of available pointer functionalities being selectable by the user, optionally wherein the set of available pointer functionalities includes one or more of:
a) zoom in and zoom out the virtual 3D object (131) or parts thereof,
b) grab and rotate the virtual 3D object (131) or parts thereof,
c) drag and drop the virtual 3D object (131) or parts thereof,
d1) define at least one cut plane within the virtual 3D object (131),
d2) shift the position of at least one cut plane within the virtual 3D object (131),
d3) display at least one cut view of the virtual 3D object (131) based on a defined at least one cut plane within the virtual 3D object (131),
e) fade in and fade out sparts of the virtual 3D object (131) based on at least one fading rule,
f) show and hide at least one part of the virtual 3D object (131).

7. The computer-implemented method of claim 6, wherein the set of available pointer functionalities, preferably a pre-selection of available pointer functionalities, are provided to the user by a second display means (130) including touch functionalities allowing the user to select the desired pointer functionality by touch input, preferably by pressing and holding the respectively desired pointer functionality, optionally wherein the second display means (130) is integrated into or is adjacent to the touch-sensitive control surface (140), optionally wherein the second display means (130) is integrated into a base portion of a laptop computer being the computer device (110), optionally wherein the set of available pointer functionalities displayed in a curved arrangement.

8. The computer-implemented method of claim 6 or 7, wherein if the selected pointer functionality includes zoom in and zoom out the virtual 3D object (131) or parts thereof, the step of causing generating involves:
the generated functionality-specific control commands are configured to zoom in and zoom out the virtual 3D object (131) in accordance with the free-space movement of the at least one finger (150) of the user, wherein zooming in is performed if the at least one finger (150) of the user is moves down, preferably in a direction towards and essentially orthogonal to the touch-sensitive control surface (140), and wherein zooming in is performed if the at least one finger (150) of the user is moves up, preferably in a direction away from and essentially orthogonal to the touch-sensitive control surface (140), or vice versa;
optionally wherein the selection user input includes pressing and holding a button or a touch control element, wherein the respective button or touch control element is preferably located on the second display means (130).

9. The computer-implemented method of any one of claims 6 to 8, wherein if the selected pointer functionality includes grab and rotate the virtual 3D object (131) or parts thereof, the step of causing generating involves:
the generated functionality-specific control commands are configured to grab and rotate the virtual 3D object (131) or parts thereof in accordance with the free-space movement of the at least one finger (150) of the user, wherein grabbing and rotating is performed in accordance with the free-space finger movement while the selection user input includes pressing and holding a button or a touch control element, wherein the respective button or touch control element is preferably located on the second display means (130).

10. The computer-implemented method of any one of claims 6 to 9, wherein if the selected pointer functionality includes defining, shifting and displaying a cur plane in accordance with d1), d2) and d3), the method includes:
displaying a cut plane on a predetermined position of the virtual 3D object (131) and preferably displaying, in addition to the virtual 3D object (131), a cut view of the cut plane;
wherein the generated functionality-specific control commands are configured to shifting and/or rotating the cut plane within the virtual 3D object (131) in accordance with the free-space movement of the at least one finger (150) of the user, preferably depending on whether the finger moves up or down, e.g., in a direction essentially orthogonal to the touch-sensitive control surface (140);
wherein the cut view is adapted in real time in accordance with the shifting and/or rotating;
optionally wherein the selection user input includes pressing and holding a button or a touch control element, wherein the respective button or touch control element is preferably located on the second display means (130).

11. The computer-implemented method of any one of claims 6 to 10, wherein if the selected pointer functionality includes fade in and fade out parts of the virtual 3D object (131) based on at least one fading rule, the method includes:
displaying parts of the virtual 3D objects (131) which are faded in and not displaying parts of the virtual 3D object (131) which are faded out;
wherein the at least one fading rule includes distinguishing parts of the virtual 3D object (131) based on their position with respect to a center of gravity or center of volume, preferably wherein fading out is performed from outside the virtual 3D object (131) towards the center of gravity or center of volume of the virtual 3D object (131) and fading in is performed starting from the center of gravity or center of volume towards the outside of the virtual 3D object (131), or
wherein the at least one fading rule includes distinguishing parts of the virtual 3D object (131) based on their density value, e.g., as measured by a magnetic resonance imaging (MRI), preferably wherein fading out is performed starting from parts having a low density value towards parts having a high density value and fading in is performed starting from parts having a high density value towards parts having a low density value;
wherein the generated functionality-specific control commands are configured to fade in and fade out in accordance with the free-space movement of the at least one finger (150) of the user, preferably depending on whether the finger moves up or down, e.g., in a direction essentially orthogonal to the touch-sensitive control surface (140);
optionally wherein the selection user input includes pressing and holding a button or a touch control element, wherein the respective button or touch control element is preferably located on the second display means (130).

12. The computer-implemented method of any one of claims 6 to 11, wherein if the selected pointer functionality includes show and hide at least one part of the virtual 3D object (131), the method includes:
displaying parts of the virtual 3D objects (131) which are selected to be shown and not hidden;
wherein parts of the virtual 3D object (131) are detected by a machine learning model to facilitate selection by the user which parts to show and/or hide;
wherein the generated functionality-specific control commands are configured to show or hide in accordance with the free-space movement of the at least one finger (150) of the user, preferably depending on whether the finger points at a specific part to be shown or hidden and at the same time the selection user input includes pressing a button or a touch control element, wherein the respective button or touch control element is preferably located on the second display means (130).

13. The computer-implemented method of any one of claims 1 to 12, comprising:
obtaining (S201), using the touchless interaction system (120), sensor data associated with a physical input object (160), preferably being the user's hand or finger, wherein movement and shape of the physical input object (160) are continuously captured by the touchless interaction system (120) and are included in the sensor data;
generating (S202), based on the sensor data, a virtual representation (170) of the physical input object (160) based on a point cloud and/or voxel cloud which is preferably derived from or included in the sensor data;
displaying (S203), using the display means (130), the virtual representation (170) together with the virtual 3D object (131), wherein movement and shape of the virtual representation correspond to the movement and shape of the physical input object (160);
optionally wherein one or more further virtual input objects are captured (S204) by the touchless interaction system (120) and corresponding virtual representations (170) are displayed, wherein a virtual input object or a further virtual input object may include a user's hand or finger or a tool, such as a surgical tool, e.g., a scalpel or endoscope.

14. A data processing apparatus, preferably an electronic device, more preferably a computer device (110), more preferably a laptop device, comprising means for carrying out the method of any one of claims 1 to 13, wherein if the data processing apparatus is a laptop device, it comprises a base portion and a top portion being, preferably hingedly, connected to each other, wherein the display means (130) is included in the top portion and the touch-sensitive control surface (140), and optionally the second display means (130), is included in the base portion.

15. A computer program or a computer-readable medium having stored thereon a computer program, the computer program comprising instructions which, when the program is executed by a computer, preferably according to claim 14, cause the computer to carry out the method of any one of claims 1 to 13.
